# EUROPEAN PATENT APPLICATION

(11) **EP 4 241 931 A1**
(43) Date of publication of application: **13.09.2023**
(21) Application number: 21888964.0
(22) Date of filing: 05.10.2021
(51) Int. Cl.: B25J 15/00, B25J 15/08

(54) **HAND AND CONTROL METHOD OF HAND**

(30) Priority: 04.11.2020 JP 2020184710
(71) Applicant: KAWASAKI JUKOGYO KABUSHIKI KAISHA, Kobe-shi, Hyogo 650-8670 (JP)
(72) Inventor: MURASE, Yohei, Chuo-ku, Kobe-shi, Hyogo 6508670 (JP); MATSUURA, Takeshi, Chuo-ku, Kobe-shi, Hyogo 6508670 (JP); ORYU, Tamami, Chuo-ku, Kobe-shi, Hyogo 6508670 (JP); WADA, Hisao, Chuo-ku, Kobe-shi, Hyogo 6508670 (JP); FUKUDA, Hiroaki, Chuo-ku, Kobe-shi, Hyogo 6508670 (JP)
(74) Representative: Puschmann Borchert Kaiser Klettner Patentanwälte Partnerschaft mbB
(86) International application number: PCT/JP2021/036881
(87) International publication number: WO 2022/097411

(57) **Abstract**

A hand 100 includes a first gripper 2 and a second gripper 5. The second gripper 5 grips a workpiece located on a predetermined axis E. The first gripper 2 includes two first fingers 21 that are opened and closed in a predetermined opening/closing direction. Each of the first fingers 21 includes a first part 22 including a distal end and a second part 23 including a proximal end, and is bent or curved such that the first part 222 moves between an interference position M1 at which an imaginary region X defined by projecting the first part 22 in the opening/closing direction A interferes with the axis E and a non-interference position M2 at which the imaginary region X does not interfere with the axis E.

## Description

### FIELD

The present disclosure relates to a hand and a control method of the hand.

### BACKGROUND

Patent Document 1 discloses a hand including a sucker and a pair of fingers. The hand changes a posture of a component with the sucker and the pair of fingers. Specifically, the sucker sucks the component stored in a component supplier. The sucker changes the posture of the sucked component. Then, the sucker moves the component whose posture has been changed to a position between the pair of fingers, and the pair of fingers receives the component. In this manner, the pair of fingers grips the component in a posture different from the posture of the component when sucked by the sucker.

### CITATION LIST

### PATENT DOCUMENT

Patent Document 1: Japanese Patent Application Publication No. 2008-23641

### SUMMARY

### TECHNICAL PROBLEM

If a hand for gripping a workpiece can perform various actions as well as simply gripping a workpiece, the amount of actions of a robot arm or a device to which the hand is coupled decreases. Thus, it has been demanded to perform various actions with one hand.

It is therefore an object of the technique of the present disclosure to enable various actions with cooperation of grippers in one hand.

A hand according to the present disclosure includes: a first gripper; and a second gripper, wherein the second gripper grips a workpiece located on a predetermined axis, the first gripper includes two first fingers that are opened and closed in a predetermined opening/closing direction, and each of the two first fingers includes a first part including a distal end and a second part including a proximal end, and is bent or curved such that the first part moves between an interference position at which an imaginary region defined by projecting the first part in the opening/closing direction interferes with the axis and a non-interference position at which the imaginary region does not interfere with the axis.

With this configuration, the second gripper grips the workpiece on the predetermined axis, and the two first fingers are bent or curved to thereby move the first parts at the distal ends of the first fingers to the interference position. Since the two first fingers are can be opened and closed, the first parts can also be opened and closed. That is, the first parts are not only opened and closed at the non-interference position but also opened and closed at the interference position. Accordingly, the first gripper and the second gripper can achieve various actions in cooperation.

The had control method for controlling the hand according to the present disclosure includes: gripping a workpiece by the first gripper with the first parts of the two first fingers; moving the first parts to the interference position by the first gripper with the workpiece gripped by the first gripper; and receiving the workpiece by the second gripper from the first parts at the interference position.

With this configuration, since the first fingers that can be opened and closed are bent or curved, the workpiece gripped by the first parts of the first fingers are moved to the interference position and gripping is released so that the workpiece can be thereby delivered to the second gripper.

The had control method for controlling the hand according to the present disclosure includes: guiding the workpiece by the first gripper with the first parts to a posture for gripping the workpiece by the second gripper in a state where the first parts of the two first fingers have been moved to the interference position; and gripping, by the second gripper, the workpiece guided by the first gripper.

With this configuration, stable gripping of the workpiece by the second workpiece can be achieved with cooperation of the first gripper and the second gripper in one hand.

The had control method for controlling the hand according to the present disclosure includes: gripping a workpiece by the second gripper; and gripping, by the first gripper, the workpiece gripped by the second gripper with the first fingers that are bent or curved.

With this configuration, since the first fingers are bent or curved such that the first parts move to the interference position, the workpiece gripped by the second gripper can be gripped by the first fingers. That is, the first gripper and the second gripper can grip the workpiece in cooperation. As a result, stability in gripping the workpiece is enhanced.

The had control method for controlling the hand according to the present disclosure includes: moving the first parts to the interference position by the first gripper; temporarily placing the workpiece by the second gripper on the first parts at the interference position with the workpiece gripped by the second gripper; and gripping the workpiece placed on the first parts by the second gripper again.

With this configuration, the second gripper can grip the workpiece again with one hand. Accordingly, the second gripper can grip the workpiece again with more stability and grip the workpiece again by changing portions gripped by the second gripper.

The had control method for controlling the hand according to the present disclosure includes: gripping a first workpiece by the first gripper with the first fingers that are bent or curved, the first workpiece being combined with a second workpiece; gripping the second workpiece by the second gripper; and changing relative positions of the first workpiece and the second workpiece by the second gripper by moving the second gripper in a direction of the axis while gripping the second workpiece.

With this configuration, since the first fingers are bent or curved such that the first parts move to the interference position, the workpiece gripped by the second gripper can be gripped by the first fingers. Accordingly, in the combined first and second workpieces, the first workpiece is gripped by the first gripper with the first fingers that are bent or curved, and the second workpiece is gripped by the second gripper. In this state, the second gripper moves the second workpiece in the direction of the axis, thereby changing relative positions of the first workpiece and the second workpiece. Such a complicated action can be achieved with one hand.

The hand can achieve various actions with cooperation of grippers in one hand.

With the control method of the hand, various actions can be achieved with cooperation of grippers in one hand.

### BRIEF DESCRIPTION OF THE DRAWINGS

[FIG. 1] FIG. 1 is a schematic view illustrating a configuration of a robot system.
[FIG. 2] FIG. 2 is a front view of a hand.
[FIG. 3] FIG. 3 is a cross-sectional view of the hand taken along line III-III in FIG. 2.
[FIG. 4] FIG. 4 is an enlarged cross-sectional view about a first part of a first finger.
[FIG. 5] FIG. 5 is a cross-sectional view of a first hand taken along line V-V in FIG. 3.
[FIG. 6] FIG. 6 is an enlarged cross-sectional view about a second part of the first finger.
[FIG. 7] FIG. 7 is a schematic view of a second hand seen from a side opposite to the first hand while showing the inside of the base, where second fingers are fully open.
[FIG. 8] FIG. 8 is a schematic view of the second fingers seen from an advancing side in an axial direction.
[FIG. 9] FIG. 9 is a schematic cross-sectional view about a second gripper.
[FIG. 10] FIG. 10 is a schematic view of the second hand seen from the side opposite to the first hand while showing the inside of the base, where the second fingers are fully closed.
[FIG. 11] FIG. 11 is a schematic cross-sectional view about the second gripper where the second fingers are fully closed.
[FIG. 12] FIG. 12 is a schematic view of the second hand seen from the side opposite to the first hand while showing the inside of the base, where the second fingers are fully closed and advance in the axial direction.
[FIG. 13] FIG. 13 is an enlarged cross-sectional view about a damper.
[FIG. 14] FIG. 14 is a perspective view illustrating a schematic configuration of a bearing unit.
[FIG. 15] FIG. 15 is a perspective view illustrating a schematic configuration of a base plate.
[FIG. 16] FIG. 16 is a perspective view illustrating a schematic configuration of an angle.
[FIG. 17] FIG. 17 is a perspective view illustrating a schematic configuration of a bearing holder.
[FIG. 18] FIG. 18 is a schematic view illustrating a state where the angle is gripped by a first gripper.
[FIG. 19] FIG. 19 is a schematic view illustrating a state where the angle is placed on the base plate by the first gripper.
[FIG. 20] FIG. 20 is a schematic view illustrating a state where a bolt is gripped by the first gripper.
[FIG. 21] FIG. 21 is a schematic view illustrating a state where the second gripper receives the bolt from the first gripper.
[FIG. 22] FIG. 22 is a schematic view illustrating a state where the second gripper screws the bolt into a screw hole.
[FIG. 23] FIG. 23 is a schematic view illustrating a state where the second gripper grips the bearing holder.
[FIG. 24] FIG. 24 is a schematic view illustrating a state where the second gripper inserts the bearing holder into the angle.
[FIG. 25] FIG. 25 is a schematic view illustrating a state of the bearing holder inserted in the angle when seen from an end surface side, and illustrates a state where the first finger is engaged with a counterbore.
[FIG. 26] FIG. 26 is a schematic view illustrating a state where the second gripper screws the bolt into the screw hole of the angle.
[FIG. 27] FIG. 27 is a schematic view illustrating a state where the first gripper grips a shaft.
[FIG. 28] FIG. 28 is a schematic view illustrating a state where the second gripper receives the shaft from the first gripper.
[FIG. 29] FIG. 29 is a schematic view illustrating a state where the second gripper inserts the shaft into a bearing of the bearing holder.
[FIG. 30] FIG. 30 is a schematic view illustrating a state where the first gripper has performed a bending action in a bolt delivery action.
[FIG. 31] FIG. 31 is a perspective view schematically illustrating an imaginary region of the first part.
[FIG. 32] FIG. 32 is a schematic view of the first finger that has performed a guide action in the bolt delivery action, seen from a distal end.
[FIG. 33] FIG. 33 is a schematic view illustrating a state where the first gripper has performed the guide action in the bolt delivery action.
[FIG. 34] FIG. 34 is a schematic view illustrating a state where the first gripper has performed a bending action in a shaft delivery action.
[FIG. 35] FIG. 35 is a schematic view illustrating a state where the first gripper has placed the shaft on the tray before the guide action in the shaft delivery action.
[FIG. 36] FIG. 36 is a schematic view of the first finger that has performed the guide action in the shaft delivery action, seen from a distal end thereof.
[FIG. 37] FIG. 37 is a schematic view illustrating a state where the first gripper and the second gripper have performed a cooperative gripping action after the shaft delivery action.
[FIG. 38] FIG. 38 is a schematic view illustrating a state where the second gripper performs first gripping of rings in a grip adjusting action.
[FIG. 39] FIG. 39 is a schematic view illustrating a state where the first gripper has performed a bending action in the grip adjusting action.
[FIG. 40] FIG. 40 is a schematic view illustrating a state where the second gripper has temporarily placed the rings on the first part in the grip adjusting action.
[FIG. 41] FIG. 41 is a schematic view illustrating a state where the second gripper has performed second gripping of the rings in the grip adjusting action.
[FIG. 42] FIG. 42 is a schematic view illustrating a state where a pulley and a shaft cooperatively gripped by the first gripper and the second gripper are conveyed to a combining position to the angle.
[FIG. 43] FIG. 43 is a schematic view illustrating a state where the first gripper and the second gripper grip the pulley and the shaft in a relative moving action.
[FIG. 44] FIG. 44 is a schematic view illustrating a state where the second gripper is moved so that the shaft is moved relative to the pulley in the relative moving action.
[FIG. 45] FIG. 45 is a schematic view illustrating a state where the second gripper has moved the pulley and the shaft after the relative moving action.
[FIG. 46] FIG. 46 is a schematic view illustrating a state where a second gripper receives a bolt from a first gripper in a hand according to another embodiment.

### DESCRIPTION OF EMBODIMENTS

An exemplary embodiment will be described in detail hereinafter with reference to the drawings.

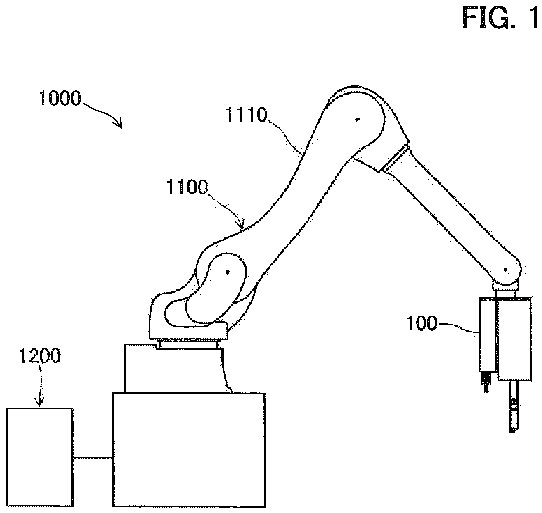

FIG. 1 is a schematic view illustrating a configuration of a robot system 1000.

The robot system 1000 includes a robot 1100 and a controller 1200 that controls the robot 1100.

The robot 1100 is, for example, an industrial robot. The robot 1100 includes a robot arm 1110 and a hand 100 coupled to the distal end of the robot arm 1110. The robot 1100 operates, that is, moves the hand 100 by the robot arm 1110. The hand 100 is a so-called end effector. The hand 100 grips a workpiece W. The hand 100 also adjusts gripping of the workpiece W and/or combines the workpiece W to another workpiece, for example.

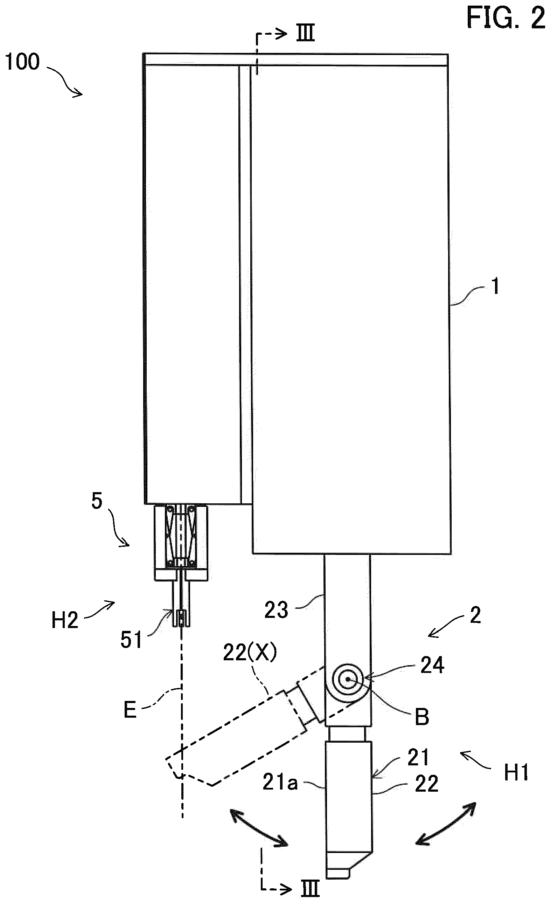

FIG. 2 is a front view of the hand 100. The hand 100 includes a first hand H1 and a second hand H2. The first hand H1 and the second hand H2 are disposed on a common base 1. The first hand H1 and the second hand H2 can execute a treatment individually or in cooperation. Examples of the individual treatment include a treatment in which the first hand H1 or the second hand H2 grips a workpiece. Examples of the cooperative treatment include a treatment in which the first hand H1 delivers a workpiece to the second hand H2 and a treatment in which the first hand H1 and the second hand H2 grip a workpiece.

### =First Hand=

The first hand H1 includes the base 1 and a first gripper 2 disposed on the base 1. The first hand H1 performs various treatments on a workpiece by the first gripper 2.

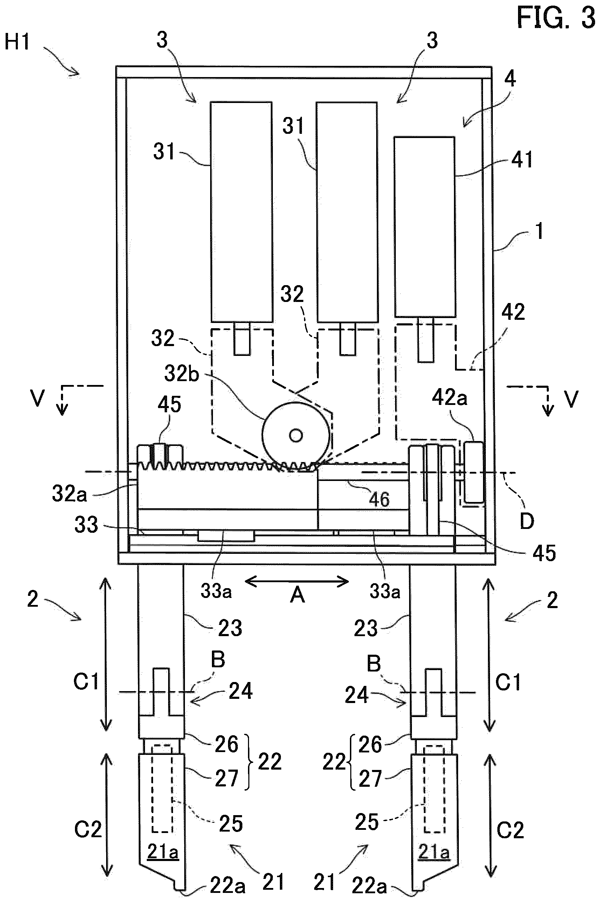

FIG. 3 is a cross-sectional view of the hand 100 taken along line III-III in FIG. 2. Specifically, FIG. 3 is a view of the first hand H1 seen from the second hand H2, while showing the inside of the base 1. In FIG. 3, an internal configuration of the base 1 is schematically shown.

The first gripper 2 includes two first fingers 21 that are opened and closed. Specifically, the first gripper 2 includes the two first fingers 21 extending from the base 1, opening/closing actuators 3 that open and close the two first fingers 21 in predetermined opening/closing directions A, and a bending actuator 4 that bends the two first fingers 21. Each of the first fingers 21 includes a damper 25 that absorbs shock on the first finger 21.

The two first fingers 21 moves toward or away from each other in the opening/closing directions A by the opening/closing actuators 3. Accordingly, the two first fingers 21 grips a workpiece and release gripping of the workpiece. In this example, the opening/closing actuator 3 cause the two first fingers 21 to operate individually. That is, the first hand H1 includes two opening/closing actuators 3 respectively associated with the two first fingers 21. The two first fingers 21 are bendable by the bending actuator 4. The bending actuator 4 causes the two first fingers 21 to operate simultaneously. The first hand H1 includes one bending actuator 4 common to the two first fingers 21. The opening/closing actuators 3 and the bending actuator 4 are disposed on the base 1.

### -First Finger-

As illustrated in FIGS. 2 and 3, each of the first fingers 21 includes a first part 22 including a distal end and the second part 23 including a proximal end (end toward the base 1). The first part 22 and the second part 23 are coupled to each other by a joint 24. The first part 22 rotates about a rotation axis B parallel to the opening/closing directions A through the joint 24. Accordingly, the first finger 21 changes to a bent state where the first part 22 is bent with respect to the second part 23 and an extended state where the first part 22 and the second part 23 are extended in a straight line.

The second part 23 is coupled to the base 1. The second part 23 extends from the base 1 in extension directions C1 orthogonal to the opening/closing directions A. The joint 24 is disposed at the distal end of the second part 23.

The first part 22 includes a fixer 26 and a mover 27. The fixer 26 and the mover 27 are aligned in a straight line and extend in extension directions C2. The fixer 26 is coupled to the joint 24. The mover 27 is coupled to the fixer 26 through the damper 25 to be movable in the extension directions C2. A surface of the mover 27 facing the second hand H2 in the extended state of the first finger 21 is a support surface 21a that supports a workpiece when the first hand H1 delivers the workpiece to the second hand H2, for example.

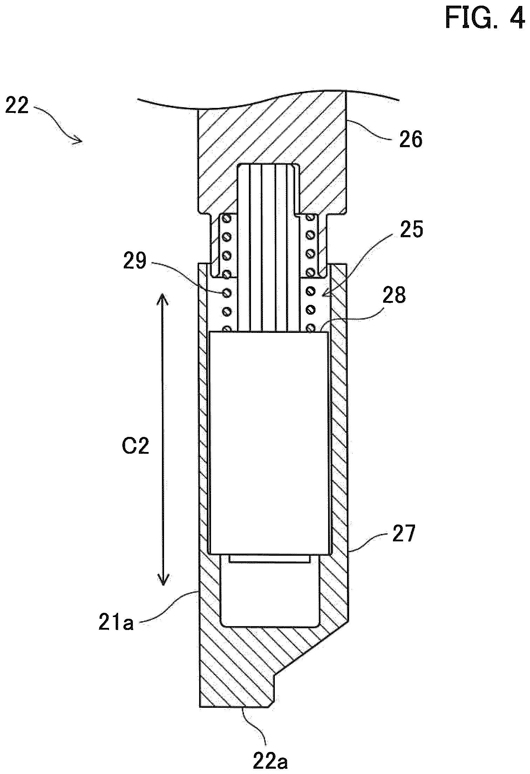

FIG. 4 is an enlarged cross-sectional view about the first part 22 of the first finger 21. As illustrated in FIG. 4, the damper 25 includes a ball spline 28 and a spring 29. The ball spline 28 couples the fixer 26 and the mover 27 to each other. The ball spline 28 allows the mover 27 to be movable in the extension directions C2 with respect to the fixer 26, and prevents the mover 27 from rotating about the axis of the ball spline 28. The spring 29 is compressed between the fixer 26 and the mover 27. The spring 29 extends and contracts in the extension directions C2. The spring 29 pushes the mover 27 in the extension directions C2 so that the mover 27 extends most from the fixer 26. The first part 22 is normally in this state where the mover 27 extends most from the fixer 26 (hereinafter referred to as a "normal state"). The ball spline 28 includes a roller that guides the mover 27 in the extension directions C2 by rolling. The spring 29 elastically pushes the mover 27.

On the other hand, when shock is exerted from a distal end 22a of the mover 27 (hereinafter referred to as the distal end 22a of the first finger 21 or the distal end 22a of the first part 22) on the mover 27 in the extension directions C2, the mover 27 moves toward the fixer 26 in the extension directions C2, and the spring 29 is compressed to be deformed. Accordingly, the shock is absorbed by the spring 29. Once the shock is removed, the spring 29 extends, and the mover 27 returns to the normal state.

In this manner, the first finger 21 bends by rotation of the first part 22 about the rotation axis B, and absorbs shock on the first finger 21 by extension and contraction of the first part 22.

### -Opening/closing Actuator-

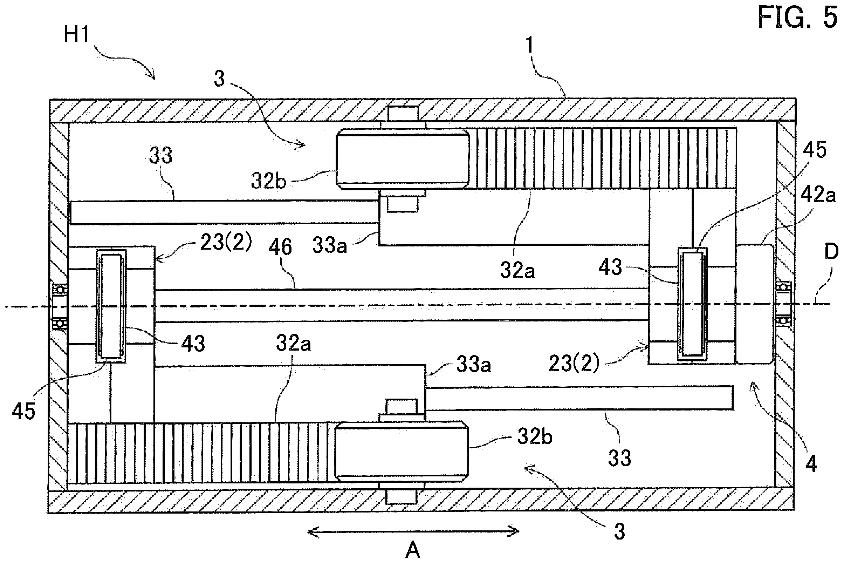

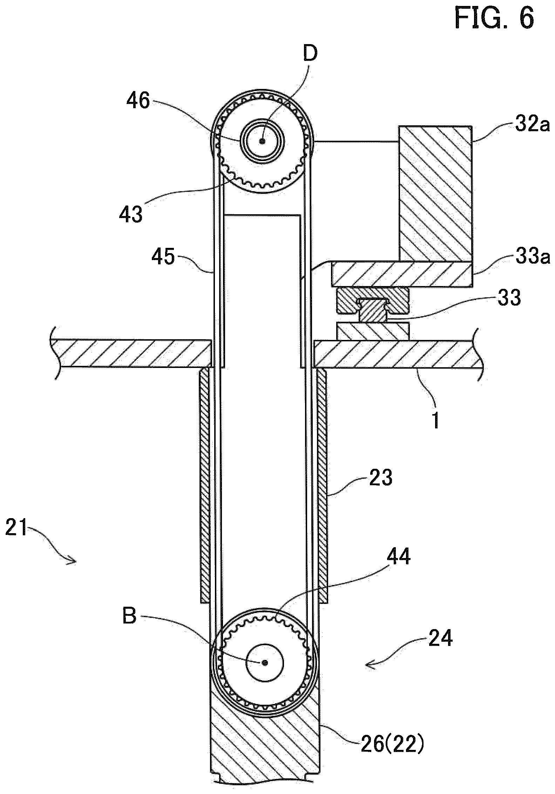

FIG. 5 is a cross-sectional view of the first hand H1 taken along line V-V in FIG. 3. FIG. 6 is an enlarged cross-sectional view about the second part 23 of the first finger 21. FIG. 5 does not show a part of gear trains 32 of the opening/closing actuators 3 and a part of a gear train 42 of the bending actuator 4.

As illustrated in FIGS. 3 and 5, each of the opening/closing actuators 3 includes a first motor 31, the gear train 32 that transfers a driving force of the first motor 31, and a guide 33 that guides the first fingers 21 in the opening/closing directions A. The two opening/closing actuators 3 are disposed not to interfere with each other in the base 1.

The first motor 31 is, for example, a servo motor and includes an encoder. A driver of the first motor 31 includes a current sensor.

The first fingers 21 is slidably coupled to the guide 33. Specifically, the guide 33 is disposed in the base 1 and extends in the opening/closing directions A. A block 33a is slidably disposed on the guide 33. The second part 23 of each of the first fingers 21 is attached to the block 33a.

The gear train 32 transfers a driving force of the first motor 31 to the first finger 21. For example, the gear train 32 includes a rack 32a and a pinion 32b serving as a rack-and-pinion. The rack 32a is attached to the block 33a. In this state, the rack 32a extends in the opening/closing directions A. That is, teeth of the rack 32a are arranged in the opening/closing directions A. The pinion 32b meshes with the rack 32a. Accordingly, a rotary force of the first motor 31 transferred to the pinion 32b is converted to a linear moving force of the rack 32a in the opening/closing directions A. When the rack 32a moves in the opening/closing directions A, the block 33a and the first fingers 21 also move in the opening/closing directions A together with the rack 32a.

In the thus-configured opening/closing actuator 3, when the first motor 31 is driven, a rotation driving force of the first motor 31 is transferred by the gear train 32. Finally, the rotational driving force is transferred as a linear moving force to the block 33a by the rack 32a and the pinion 32b included in the gear train 32. The block 33a moves in the opening/closing directions A along the guide 33. Together with the block 33a, the first finger 21 also moves in the opening/closing directions A. The direction of movement of the first finger 21 in the opening/closing directions A is switched by the rotation direction of the first motor 31. The position of the first finger 21 in the opening/closing directions A is detected based on an encoder output of the first motor 31. A rotation torque of the first motor 31 in movement of the first finger 21 is detected based on a detection result of the current sensor.

Since the opening/closing actuator 3 is disposed in each of the first fingers 21, the two first fingers 21 are moved in the opening/closing directions A independently of each other by the opening/closing actuators 3 thereof.

### -Bending Actuator-

As illustrated in FIGS. 3, 5, and 6, the bending actuator 4 includes a second motor 41, the gear train 42 that transfers a driving force of the second motor 41, first timing pulleys 43 that receive a driving force of the second motor 41 through the gear train 42, second timing pulleys 44 disposed at the joints 24, and timing belts 45 that transfer rotation of the first timing pulleys 43 to the second timing pulleys 44. Each first finger 21 has one set of the first timing pulley 43, the second timing pulley 44, and the timing belt 45.

The second motor 41 is, for example, a servo motor and includes an encoder. A driver of the second motor 41 includes a current sensor.

The gear train 42 includes a worm gear, a worm wheel, a spur gear 42a, and so forth. The spur gear 42a is rotatably supported through the ball spline 46. Specifically, the ball spline 46 is disposed in the base 1 and extends in the opening/closing directions A. The ball spline 46 is supported by the base 1 to be rotatable about an axis D of the ball spline 46. The spur gear 42a is non-rotatably disposed to the ball spline 46. That is, the spur gear 42a rotates integrally with the ball spline 46 about the axis D.

The first timing pulleys 43 are non-rotatably disposed to the ball spline 46. Two first timing pulleys 43 are disposed to the ball spline 46. The first timing pulleys 43 rotate together with the ball spline 46 about the axis D. That is, rotation of the spur gear 42a is transferred to the first timing pulleys 43 through the ball spline 46. In addition, the first timing pulleys 43 are slidable with respect to the ball spline 46 in the direction of the axis D.

Each of the first timing pulleys 43 is coupled to an associated one of the first fingers 21. Specifically, the first timing pulley 43 is coupled to an end of the second part 23 near the base 1 and is rotatable about the axis D. That is, when the first finger 21 moves in the opening/closing directions A along the guide 33, the first timing pulley 43 moves in the direction of the axis D of the ball spline 46 together with the first finger 21. While the ball spline 46 rotates, the first finger 21 does not rotate and the first timing pulley 43 rotates together with the ball spline 46.

The second timing pulley 44 is non-rotatably provided to the fixer 26 of the first part 22 in the joint 24 of each first finger 21. That is, when the second timing pulley 44 rotates, the first part 22 rotates about the rotation axis B.

The timing belt 45 is wound around the first timing pulley 43 and the second timing pulley 44. The timing belt 45 transfers rotation of the first timing pulley 43 to the second timing pulley 44.

In the thus-configured bending actuator 4, when the second motor 41 is driven, a rotational driving force of the second motor 41 is transferred to the ball spline 46 through the gear train 42. When the ball spline 46 rotates about the axis D, the first timing pulley 43 disposed to the ball spline 46 rotates about the axis D. Since the first finger 21 is coupled to the guide 33, the first finger 21 does not rotate. Rotation of the first timing pulley 43 is transferred to the second timing pulley 44 by the timing belt 45. When the second timing pulley 44 rotates, the first part 22 of the first finger 21 rotates about the rotation axis B. Accordingly, the first finger 21 bends. At some rotation angle of the first part 22, the first part 22 and the second part 23 are aligned in a straight line.

The rotation direction of the first part 22 about the rotation axis B, that is, the direction of bending of the first finger 21, is switched depending on the rotation direction of the second motor 41. The rotation position of the first part 22 about the rotation axis B, that is, the degree or bending or the bending angle of the first finger 21, is detected based on an encoder output of the second motor 41. A rotation torque of the second motor 41 when the first finger 21 bends is detected based on a detection result of the current sensor.

Each first finger 21 includes a set of the first timing pulley 43, the second timing pulley 44, and the timing belt 45. The first timing pulleys 43 of the first fingers 21 are disposed to the common ball spline 46. That is, driving of the common second motor 41 causes the two first fingers 21 to bend in the same manner at the same time. The direction and angle of bending are the same for the two first fingers 21.

Each first finger 21 can move in the closing directions A along the guide 33. At this time, the first timing pulley 43 also moves in the opening/closing directions A along the ball spline 46 together with the first finger 21. That is, the bending actuator 4 enables the first fingers 21 to bend at any position in the opening/closing directions A.

### -Brief Description of Operation of First Hand H1-

The first hand H1 configured as described above moves the two first fingers 21 in the opening/closing directions A by the opening/closing actuators 3 to thereby enable the two first fingers 21 to grip a workpiece. For example, the first hand H1 can grip a workpiece by causing the two first fingers 21 to approach each other (to perform a closing action) in the opening/closing directions A, and also grip a workpiece by causing the two first fingers 21 to move away from each other (to perform an opening action) in the opening/closing directions A.

Since the first hand H1 enables the two first fingers 21 to operate independently of each other by the opening/closing actuators 3, the first hand H1 can grip a workpiece at a position eccentric from the center of the first hand H1 in the opening/closing directions A (hereinafter such gripping will be referred to as eccentric gripping). The center of the first hand H1 herein is, for example, a center Q of a movable range of the first fingers 21 (hereinafter referred to simply as "center Q of the movable range"). More Specifically, the first hand H1 adjusts the amounts of movement of the two first fingers 21 in accordance with the position of the workpiece and grips the workpiece at a position eccentric from the center of the first hand H1. In this manner, even if the workpiece is deviated from the center of the first hand H1, the first hand H1 can grip the workpiece appropriately with the two first fingers 21.

As illustrated in FIG. 2, the first hand H1 can bend the two first fingers 21. Each of the first fingers 21 bends such that the first part 22 moves between a position at which an imaginary region X defined by projecting the first part 22 in the opening/closing directions A (i.e., a region defined by projecting the first part 22 in a direction orthogonal to the drawing sheet in FIG. 2) interferes with an axis E of a second gripper 5 described later and a position at which the imaginary region X does not interfere with the axis E. For example, the first hand H1 can bend the two first fingers 21 gripping the workpiece by the bending actuator 4. Thus, it is also possible to move the workpiece or change the posture of the workpiece by bending the two first fingers 21. Accordingly, the amount of operation of the robot arm 1110 can be reduced.

The first hand H1 can absorb shock on the first parts 22 of the first fingers 21 by the dampers 25. Thus, in moving the first hand H1 to the position of the workpiece, shock on the first parts 22 caused by contact between the distal ends 22a of the first parts 22 and the placing table of the workpiece can be absorbed.

### =Second Hand=

The second hand H2 is disposed on the base 1 shared by the first hand H1. The second hand H2 grips the workpiece and execute various treatments.

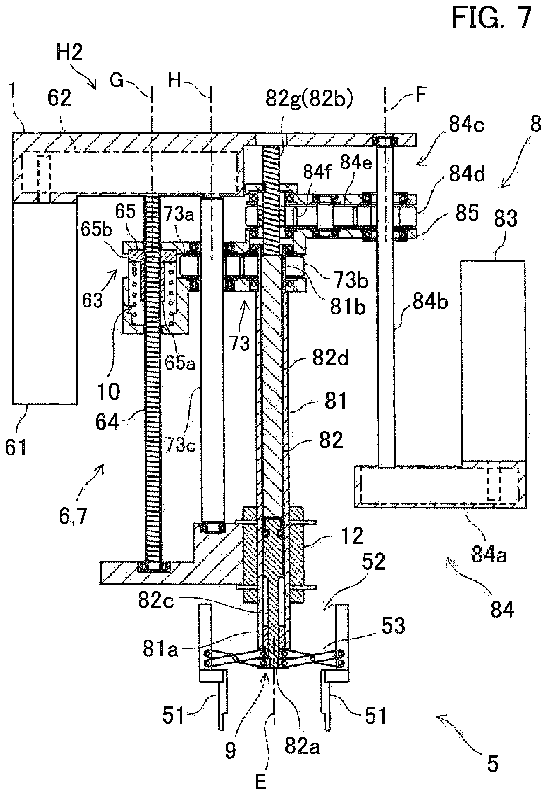

The second hand H2 will now be described in further detail. FIG. 7 is a schematic view of the second hand H2 seen from a side opposite to the first hand H1 while showing the inside of the base 1, where the second fingers 51 are fully open.

The second hand H2 includes the second gripper that holds a workpiece on the axis E. Specifically, the second hand H2 includes the second gripper 5 that grips a workpiece, a straight-moving actuator 6 that causes the second gripper to move straight in a predetermined direction of the axis E, and a rotation actuator 7 that causes the second gripper 5 to rotate about the axis E. The second gripper 5 includes three second fingers 51 that grip a workpiece, and a linkage 52 that opens and closes the three second fingers 51. The second hand H2 can move a workpiece gripped by the second gripper 5 straight in the direction of the axis E while rotating the workpiece about the axis E. Accordingly, the second hand H2 can insert the workpiece into a hole or screws the workpiece into a screw hole, for example. A side to which the second fingers 51 advance from the base 1 in the direction of the axis E will be hereinafter referred to simply as an "advancing side," and a side to which the second fingers 51 retract to the base 1 will be hereinafter referred to simply as a "retracting side."

The second hand H2 may also include an opening/closing actuator 8 that opens and closes the second fingers 51. The second hand H2 may also include a push actuator 9 that pushes a workpiece released from gripping by the second gripper 5 in the direction of the axis E. The second hand H2 may include a damper 10 that elastically supports the second fingers 51 in the direction of the axis E.

### -Gripper-

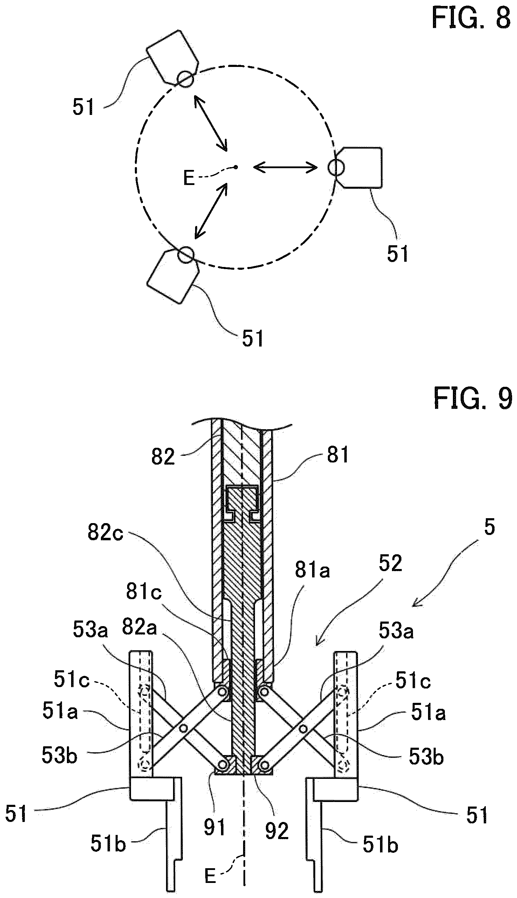

FIG. 8 is a schematic view of the second fingers 51 seen from the advancing side in the direction of the axis E. FIG. 9 is a schematic cross-sectional view about the second gripper 5.

The second gripper 5 includes three second fingers 51, and the linkage 52 that opens and closes the three second fingers 51.

As illustrated in FIG. 8, the three second fingers 51 are arranged at regular intervals (i.e., at intervals of 120 degrees) in a circumferential direction about the axis E. The three second fingers 51 are opened and closed about the axis E by the linkage 52. That is, the three second fingers 51 move away from each other and approach each other in a radial direction about the axis E. Accordingly, the three second fingers 51 grip a workpiece and release gripping of the workpiece. The three second fingers 51 are also opened and closed at the same distance from the axis E. Although the three second fingers 51 are arranged at intervals of 120 degrees about the axis E, FIG. 7 shows a state where two second fingers 51 are disposed at intervals of 180 degrees about the axis E for easy illustration of the configuration.

As illustrated in FIG. 9, each of the second fingers 51 generally extends in the direction of the axis E. Each second finger 51 includes a base 51a and a nail 51b. The nail 51b is disposed at the distal end of the base 51a. The nail 51b defines a distal end portion of the second finger 51. The second fingers 51 grip a workpiece with the nails 51b.

The linkage 52 includes links 53. The links 53 include three sets of first links 53a and second links 53b. In the drawings, the links are distinguished from each other and denoted by "53a" and "53b" in some cases or are not distinguished from each other and collectively denoted by "53" in other cases. One set of the first link 53a and the second link 53b are coupled to each of the second fingers 51. The first links 53a and the second links 53b intersect with each other, and are rotatably coupled to each other at longitudinal centers thereof. The links 53 are disposed inside the three second fingers 51 in the radial direction about the axis E.

The first links 53a are rotatably coupled to the second fingers 51 at one end. Specifically, the base 51a of each second finger 51 includes an elongated hole 51c extending in the extension direction of the second finger 51. One end of each first link 53a is rotatably and slidably coupled to the elongated hole 51c.

One end of each second link 53b is rotatably coupled to the second finger 51. Specifically, one end of the second link 53b is rotatably coupled to a portion of the base 51a of the second finger 51 closer to the distal end of the second finger 51 than the elongated hole 51c.

### -Opening/closing Actuator-

As illustrated in FIG. 7, the opening/closing actuator 8 opens and closes the three second fingers 51 by operating the linkage 52. The opening/closing actuator 8 includes an outer cylinder 81, a shaft 82, a third motor 83 that drives the linkage 52, and a gear train 84 that transfers a driving force of the third motor 83 to the shaft 82.

The outer cylinder 81 and the shaft 82 extend in the direction of the axis E coaxially about the axis E. Specifically, the outer cylinder 81 has a substantially cylindrical shape about the axis E. The shaft 82 has a substantially columnar shape about the axis E.

In the outer cylinder 81 and the shaft 82, ends on one side in the direction of the axis E will be referred to as a first end 81a and a first end 82a, respectively, and ends on the other side in the direction of the axis E will be referred to as a second end 81b and a second end 82b. The first end 81a and the first end 82a are ends on the advancing side in the direction of the axis E. The second end 81b and the second end 82b are ends on the retracting side in the direction of the axis E. The second gripper 5 is coupled to the first end 81a and the first end 82a.

The outer cylinder 81 is supported by a bearing 12 attached to the base 1 and is movable in the direction of the axis E and rotatable about the axis E.

The shaft 82 is inserted in the outer cylinder 81. The outer cylinder 81 and the shaft 82 are rotatable relative to each other about the axis E and movable relative to each other in the direction of the axis E. The first end 82a of the shaft 82 projects outward from the first end 81a of the outer cylinder 81. The second end 82b of the shaft 82 projects outward from the second end 81b of the outer cylinder 81.

The shaft 82 is divided into a link shaft 82c including the first end 82a and a shaft body 82d including the second end 82b. The link shaft 82c and the shaft body 82d are coupled to each other to be rotatable about the axis E and immovable in the direction of the axis E. The second end 82b has an external thread 82g.

As illustrated in FIG. 9, a pushing block 91 is disposed at the distal end of the link shaft 82c, that is, the distal end of the first end 82a.

A substantially cylindrical link block 81c that guides the link shaft 82c is disposed at the first end 81a of the outer cylinder 81. The link shaft 82c penetrates the link block 81c. A small clearance is present between the link shaft 82c and the link block 81c.

The linkage 52 is coupled to the first end 81a of the outer cylinder 81 and the first end 82a of the shaft 82. Specifically, ends of the first links 53a on one side (ends not coupled to the second fingers 51) are rotatably coupled to the first end 82a of the shaft 82, specifically, the pushing block 91. Ends of the second links 53b on one side (ends not coupled to the second fingers 51) are rotatably coupled to the first end 81a of the outer cylinder 81, specifically, the link block 81c.

When the link shaft 82c moves in the direction of the axis E, relative positions of ends of the first links 53a one side and ends of the second links 53b on one side change, and accordingly, the positions of the second fingers 51 in the direction of the axis E and the positions of the second fingers 51 in the radial direction about the axis E change.

The third motor 83 is, for example, a servo motor and includes an encoder. A driver of the third motor 83 includes a current sensor. As illustrated in FIG. 7, the third motor 83 is supported by the base 1.

The gear train 84 includes a first gear train 84a and a second gear train 84c disposed in this order from the third motor 83.

The first gear train 84a includes gears. The gears of the first gear train 84a are supported by the base 1 to be rotatable about an axis parallel to the axis E. The first gear train 84a transfers a rotational driving force of the third motor 83 to the second gear train 84c through the ball spline 84b. The ball spline 84b includes an axis F parallel to the axis E of the shaft 82. The ball spline 84b is supported by the base 1 to be rotatable about the axis F. A gear (gear at the final stage) in the first gear train 84a is coupled to the ball spline 84b to be nonrotatable about the axis F and immovable along the axis F. That is, when the gears of the first gear train 84a rotate, the ball spline 84b rotates about the axis F.

The second gear train 84c is housed in a gear box 85. The second gear train 84c includes a first gear 84d, a second gear 84e, and a third gear 84f. The first gear 84d, the second gear 84e, and the third gear 84f are supported by the gear box 85 to be rotatable about an axis parallel to the axis E.

The first gear 84d is coupled to the first gear train 84a through the ball spline 84b. The first gear 84d is coupled to the ball spline 84b to be non-rotatable about the axis F and movable along the axis F. That is, the first gear 84d rotates integrally with the ball spline 84b.

The internal periphery of the third gear 84f has an internal thread. The third gear 84f is screwed with the external thread 82g of the shaft 82. The second gear 84e is located between the first gear 84d and the third gear 84f and meshes with each of the first gear 84d and the third gear 84f.

The gear box 85 supports the outer cylinder 81 such that the outer cylinder 81 is rotatable about the axis E and immovable in the direction of the axis E. The shaft 82 is supported by the gear box 85 through the third gear 84f. The gear box 85 restricts rotation of the shaft 82 about the axis E to prevent the shaft 82 from rotating about the axis E.

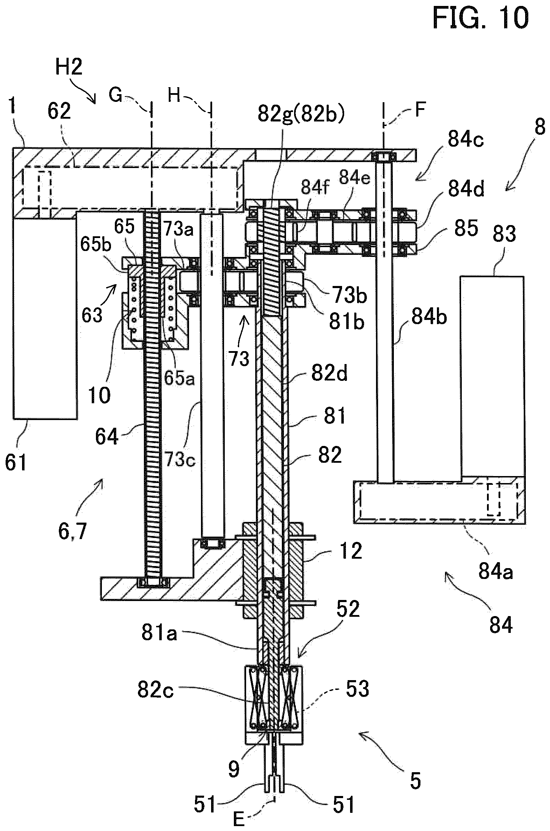

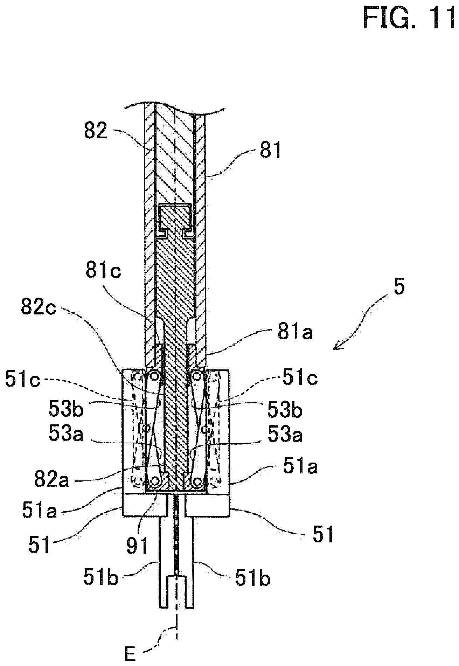

Operation of the thus-configured opening/closing actuator 8 will be described. FIG. 10 is a schematic view of the second hand H2 seen from a side opposite to the first hand H1 while showing the inside of the base 1, where the second fingers 51 are fully closed. FIG. 11 is a schematic cross-sectional view about the second gripper 5 where the second fingers 51 are fully closed.

When the third motor 83 is driven, a rotational driving force of the third motor 83 is transferred to the ball spline 84b through the first gear train 84a. When the ball spline 84b rotates about the axis F, the first gear 84d coupled to the ball spline 84b rotates about the axis F. Rotation of the first gear 84d is transferred to the third gear 84f through the second gear 84e. Since the shaft 82 does not rotate about the axis E, when the third gear 84f rotates, the shaft 82 moves in the direction of the axis E relative to the third gear 84f, as illustrated in FIG. 10. That is, the shaft 82 moves in the direction of the axis E relative to the outer cylinder 81. The movement of the shaft 82 in the direction of the axis E causes ends of the first links 53a on one side to move in the direction of the axis E together with the shaft 82, as illustrated in FIG. 11. Relative positions of the ends of the second links 53b on one side coupled to the outer cylinder 81 and the ends of the first links 53a on one side coupled to the shaft 82 in the direction of the axis E change so that relative positions of the first links 53a and the second links 53b thereby change. Accordingly, the three second fingers 51 move in the radial direction about the axis E. That is, the three second fingers 51 are opened and closed.

The direction of movement of the shaft 82 in the direction of the axis E, that is, whether the three second fingers 51 move away from or toward one another about axis E, is switched depending on the rotation direction of the third motor 83. The positions of the three second fingers 51 in the radial direction about the axis E, that is, the degree of opening and closing the three second fingers 51, is detected based on an encoder output of the third motor 83. In addition, a rotation torque of the third motor 83 in opening and closing the three second fingers 51 is detected based on a detection result of the current sensor.

### -Straight-moving Actuator and Rotation Actuator-

As described above, the second gripper 5 is coupled to the outer cylinder 81 and the shaft 82. The straight-moving actuator 6 causes the second gripper 5 to move in the direction of the axis E by moving the outer cylinder 81 and the shaft 82 in the direction of the axis E. The rotation actuator 7 causes the second gripper 5 to rotate about the axis E by rotating the outer cylinder 81 and the link shaft 82c of the shaft 82 about the axis E. In this example, some elements are shared by the straight-moving actuator 6 and the rotation actuator 7. Some elements of the straight-moving actuator 6 are shared by the opening/closing actuator 8. Some elements of the rotation actuator 7 are shared by the opening/closing actuator 8.

Specifically, as illustrated in FIGS. 7 and 10, the straight-moving actuator 6 includes a fourth motor 61, a first gear train 62 that transfers a driving force of the fourth motor 61, a feed screwer 63, the outer cylinder 81, and the shaft 82.

The fourth motor 61 is, for example, a servo motor and includes an encoder. A driver of the fourth motor 61 includes a current sensor. The fourth motor 61 is supported by the base 1.

The first gear train 62 includes gears rotatably supported by the base 1.

The feed screwer 63 includes a feed screw 64 and a nut 65 as a straight-moving element that meshes with the feed screw 64.

An axis G of the feed screw 64 extends in parallel with the axis E. The feed screw 64 is non-rotatably coupled to a gear included in the first gear train 62. That is, the feed screw 64 rotates about the axis G integrally with this gear.

The nut 65 meshes with the feed screw 64. The nut 65 is housed in the gear box 85. Rotation of the nut 65 is stopped by the gear box 85 not to rotate about the axis G. The nut 65 includes a cylindrical body 65a and a flange 65b disposed on the body 65a.

The nut 65 is elastically pushed against the gear box 85 by the damper 10 in the direction of the axis G, that is, in the direction of the axis E. Specifically, the damper 10 is a spring. More specifically, the damper 10 is a coil spring. The damper 10 is located at the advancing side of the flange 65b in the direction of the axis E. The damper 10 is compressed between the flange 65b and the gear box 85. The damper 10 pushes the gear box 85 by an elastic force against the nut 65 to the advancing side in the direction of the axis E. Accordingly, when the nut 65 moves in the direction of the axis G, the gear box 85 also moves in the direction of the axis G, that is, in the direction of the axis E, together with the nut 65.

The configurations of the outer cylinder 81 and the shaft 82 have been described above. The outer cylinder 81 is supported by the gear box 85 to be rotatable about the axis E and immovable in the direction of the axis E. The shaft 82 is supported by the gear box 85 through the third gear 84f. Accordingly, when the gear box 85 moves in the direction of the axis E, the outer cylinder 81 and the shaft 82 also move in the direction of the axis E together with the gear box 85.

As illustrated in FIGS. 7 and 10, the rotation actuator 7 includes the fourth motor 61, the first gear train 62 that transfers a driving force of the fourth motor 61, a second gear train 73 that further transfers a driving force of the fourth motor 61 from the first gear train 62 to the outer cylinder 81, the outer cylinder 81, and the shaft 82. That is, the fourth motor 61, the first gear train 62, the outer cylinder 81, and the shaft 82 of the rotation actuator 7 are shared by the straight-moving actuator 6.

The second gear train 73 includes a fifth gear 73a and a sixth gear 73b. The fifth gear 73a and the sixth gear 73b are supported by the gear box 85 to be immovable in the direction of the axis E and rotatable about an axis parallel to the axis E.

The fifth gear 73a is coupled to a gear included in the first gear train 62 through the ball spline 73c. An axis H of the ball spline 73c extends in parallel with the axis E. The ball spline 73c is coupled to this gear to be non-rotatable about the axis H. That is, the ball spline 73c rotates about the axis H integrally with this gear.

The fifth gear 73a is coupled to the ball spline 73c to be non-rotatable about the axis Hand movable in the direction of the axis H. That is, the fifth gear 73a rotates integrally with the ball spline 73c. At this time, the fifth gear 73a rotates relative to the gear box 85.

The sixth gear 73b is coupled to the outer cylinder 81 to be non-rotatable about the axis E and immovable in the direction of the axis E. That is, the sixth gear 73b rotates integrally with the outer cylinder 81.

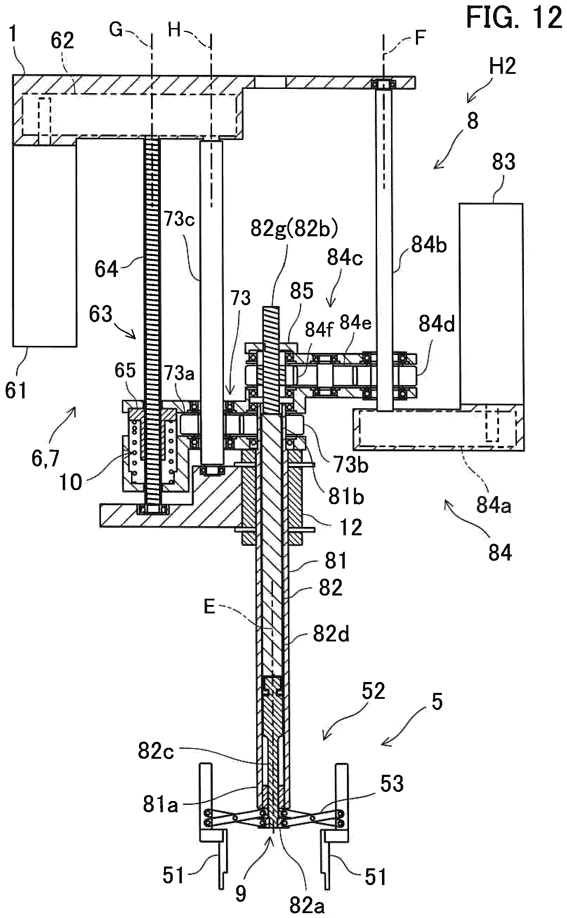

Operation of the thus-configured straight-moving actuator 6 and rotation actuator 7 will be described. FIG. 12 is a schematic view of the second hand H2 seen from a side opposite to the first hand H1 while showing the inside of the base 1, where the second fingers 51 are fully open and have advanced in the direction of the axis E.

When the fourth motor 61 is driven, a rotational driving force of the fourth motor 61 is transferred to the ball spline 73c through the first gear train 62. When the ball spline 73c rotates about the axis H, rotation of the ball spline 73c is transferred to the second gear train 73. Accordingly, the sixth gear 73b rotates about the axis E, and the outer cylinder 81 also rotates about the axis E together with the sixth gear 73b. The second links 53b of the links 53 are coupled to the first end 81a of the outer cylinder 81. The link shaft 82c to which the first links 53a of the links 53 are coupled freely rotates about the axis E with respect to the shaft body 82d. Thus, when the second links 53b rotate about the axis E, the first links 53a also rotate about the axis E together with the second links 53b. Consequently, the three second fingers 51 rotate about the axis E.

Even when the three second fingers 51 rotate about the axis E, the shaft body 82d does not rotate unless the third motor 83 operates. Thus, relative positions of the outer cylinder 81 and the shaft 82 in the direction of the axis E do not change. Consequently, the three second fingers 51 rotate about the axis E without a change of the opening/closing state of the three second fingers 51.

At the same time, a rotational driving force of the fourth motor 61 is transferred to the feed screw 64 through the first gear train 62. When the feed screw 64 rotates about the axis G, the nut 65 screwed with the feed screw 64 moves in the direction of the axis G. When the nut 65 moves along the axis G, the gear box 85 also moves in the direction of the axis G, that is, in the direction of the axis E. The gear box 85 supports the outer cylinder 81 and the shaft 82. Thus, when the gear box 85 moves in the direction of the axis E, the outer cylinder 81 and the shaft 82 also move in the direction of the axis E together with the gear box 85. At this time, the outer cylinder 81 is caused to rotate about the axis E by the rotation actuator 7. That is, the outer cylinder 81 moves straight in the direction of the axis E while rotating about the axis E.

The gear box 85 also supports the second gear train 84c of the opening/closing actuator 8. Thus, while the gear box 85 moves in the direction of the axis E, the second gear train 84c also moves in the direction of the axis E integrally with the gear box 85. The first gear 84d included in the second gear train 84c is also coupled to the ball spline 84b as well as being supported by the gear box 85. Thus, while the gear box 85 moves in the direction of the axis E, the first gear 84d slides along the ball spline 84b and moves in the direction of the axis E together with the gear box 85. At this time, as long as the third motor 83 does not operate, the first gear 84d moves in the direction of the axis E without rotating about the axis F of the ball spline 84b. Thus, gears included in the second gear train 84c do not rotate. Accordingly, while the gear box 85 moves in the direction of the axis E, relative positions of the outer cylinder 81 and the shaft 82 do not change. Consequently, the three second fingers 51 move in the direction of the axis E without a change of the opening/closing state of the three second fingers 51.

The fifth gear 73a is also coupled to the ball spline 73c as well as being supported by the gear box 85. It should be noted that the fifth gear 73a is movable along the ball spline 73c in the direction of the axis H. Thus, while the gear box 85 moves in the direction of the axis E, the fifth gear 73a slides along the ball spline 73c and moves in the direction of the axis E together with the gear box 85. Even when the gear box 85 moves in the direction of the axis E, the fifth gear 73a transfers rotation of the ball spline 73c to the sixth gear 73b appropriately.

### -Push Actuator-

The push actuator 9 pushes a workpiece released from gripping by the second gripper 5 in the direction of the axis E. In this example, the push actuator 9 is formed integrally with the straight-moving actuator 6. That is, some elements of the push actuator 9 are shared by the straight-moving actuator 6. Specifically, as illustrated in FIGS. 7, 10, and 12, the push actuator 9 includes the fourth motor 61, the first gear train 62 that transfers a driving force of the fourth motor 61, the feed screwer 63, the shaft 82, and the pushing block 91 disposed on the shaft 82 (see FIGS. 9 and 11).

As described above, a driving force of the fourth motor 61 is transferred to the feed screwer 63 by the first gear train 62. The feed screwer 63 causes the shaft 82 to move straight in the direction of the axis E through the gear box 85 and other members. As illustrated in FIG. 9, the pushing block 91 is disposed at the distal end of the link shaft 82c of the shaft 82, that is, the distal end of the first end 82a. The pushing block 91 has a pushing surface 92 orthogonal to the axis E. When the shaft 82 moves straight in the direction of the axis E by driving the fourth motor 61, the pushing block 91 moves straight in the direction of the axis E.

The links 53 of the linkage 52 are coupled to the pushing block 91. In a case where the second fingers 51 are open (at least a case where the second fingers 51 are open at maximum), the second fingers 51 are retracted outward in the radial direction about the axis E from space on the advancing side of the pushing block 91 in the direction of the axis E. In such a state where the second fingers 51 are in the open state, it is possible to avoid interference of the workpiece and the second fingers 51 when the pushing block 91 moves straight in the direction of the axis E. That is, the pushing block 91 can push the workpiece without interference with the second fingers 51.

### -Damper-

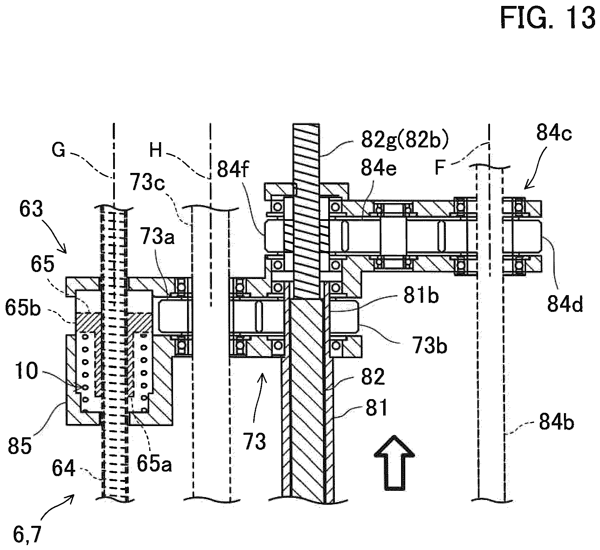

FIG. 13 is an enlarged cross-sectional view about the damper 10. In FIG. 13, members not movable relative to the base 1 in the damping function of the damper 10, that is, the feed screw 64, the nut 65, the ball spline 73c, and the ball spline 84b, are shown by broken lines. The damper 10 elastically couples the nut 65 of the feed screwer 63 to the gear box 85. Specifically, the damper 10 is housed in the gear box 85. The nut 65 and the gear box 85 are elastically coupled to each other such that the gear box 85 is displaceable relative to the nut 65 to the retracting side in the direction of the axis E. The gear box 85 supports the outer cylinder 81 and the shaft 82. The second fingers 51 are coupled to the first end 81a of the outer cylinder 81 and the first end 82a of the shaft 82 through the links 53. That is, the damper 10 elastically supports the second fingers 51 such that the second fingers 51 are displaceable to the retracting side in the direction of the axis E.

When a force is exerted on the second fingers 51 to the retracting side in the direction of the axis E, the damper 10 is elastically deformed, that is, deformed by compression, so that the second fingers 51, the linkage 52, the outer cylinder 81, the shaft 82, and the gear box 85 move as one unit to the retracting side in the direction of the axis E. In this manner, the force exerted on the second fingers 51 is absorbed.

### -Brief Description of Operation of Second Hand H2-

The thus-configured second hand H2 enables the second fingers 51 to move in the direction of the axis E by the straight-moving actuator 6 to a position appropriate for gripping a workpiece in gripping the workpiece with the second fingers 51. For example, the second hand H2 moves the three second fingers 51 in the open state to the vicinity of the workpiece in the direction of the axis E by the straight-moving actuator 6, and then, closes the three second fingers 51 to thereby grip the workpiece with the second fingers 51. The second hand H2 can also grip the workpiece by opening the second fingers 51.

The second hand H2 moves the second fingers 51 straight in the direction of the axis E while rotating the second fingers 51 about the axis E with the workpiece gripped by the second fingers 51. In this manner, the second hand H2 enables work of coupling one of workpieces to be coupled together by insertion to the other workpiece (hereinafter referred to as "coupling work"). The coupling work includes fitting work of coupling two workpieces by fitting and screwing work of coupling two workpieces by screwing. The fitting work includes work of fitting one workpiece into the inside of the other workpiece and work of fitting one workpiece onto the outside of the other workpiece. The screwing work includes work of screwing one workpiece having an external thread into the other workpiece having an internal thread and work of screwing one workpiece having an internal thread to the other workpiece having an external thread. In the fitting work, the second hand H2 can fit one workpiece to the other workpiece by pushing one workpiece by the pushing block 91 in the direction of the axis E, as well as fitting one workpiece to the other workpiece while rotating one workpiece about the axis with the one workpiece gripped by the second fingers 51.

In addition, in the second hand H2, when a force is exerted on the second fingers 51 to the retracting side in the direction of the axis E in gripping a workpiece with the second fingers 51 or in performing coupling work of a workpiece, the second fingers 51 retract in the direction of the axis E and the damper 10 absorbs the force.

The controller 1200 is a robot controller including a computer such as a microcontroller. The controller 1200 executes software such as a basic program as a robot controller stored to thereby control actions of the robot arm 1110 and the hand 100. Specifically, the controller 1200 moves the robot arm 1110 by controlling an actuator (not shown) incorporated in the robot arm 1110. The controller 1200 controls the first motor 31 and the second motor 41 to thereby move the first hand H1. The controller 1200 controls the third motor 83 and the fourth motor 61 to thereby move the second hand H2. The controller 1200 may be individually disposed to each of the hand 100 and the robot arm 1110.

### -Assembly Work-

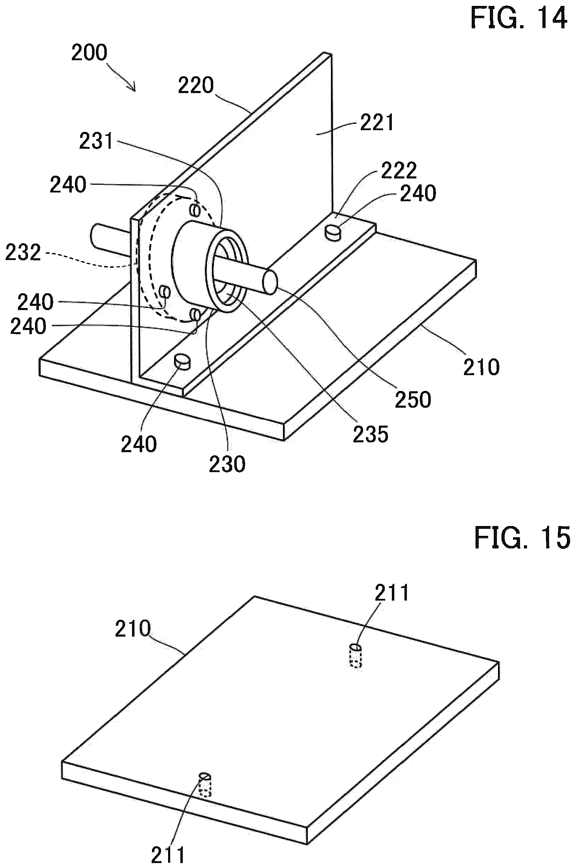

Assembly work of a bearing unit 200 by the thus-configured hand 100 will be described as an example. FIG. 14 is a perspective view illustrating a schematic configuration of the bearing unit 200. In the bearing unit 200, a bearing 235 and a bearing holder 230 are attached to an angle 220 fixed to a base plate 210, and a shaft 250 is inserted in a bearing 235. The assembly work of the bearing unit 200 includes work of placing the angle 220 on the base plate 210 (placing work), work of fastening the angle 220 to the base plate 210 with bolts 240 (first fastening work), work of inserting the bearing holder 230 into an attachment hole 224 of the angle 220 (holder inserting work), work of positioning the bearing holder 230 (positioning work), work of fastening the bearing holder 230 to the angle 220 with bolts 240 (second fastening work), and work of inserting the shaft 250 into the bearing 235 attached to the bearing holder 230 (shaft inserting work).

### -Description of Components-

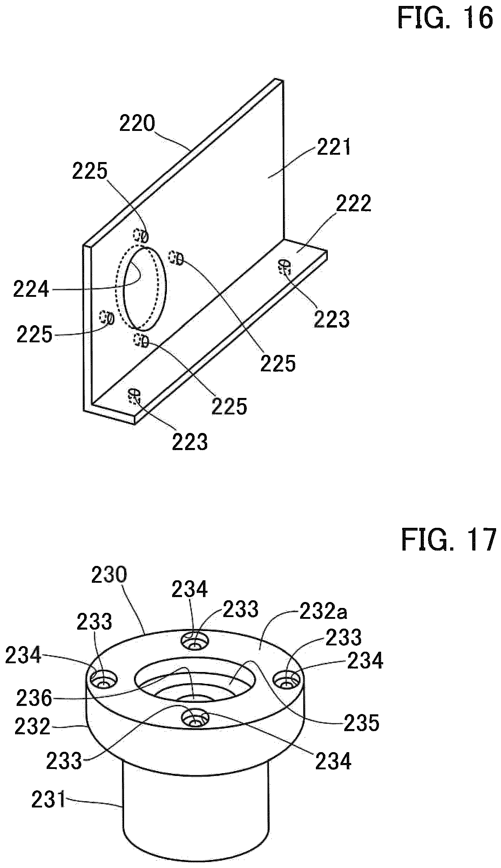

The assembly work of the bearing unit 200 includes the base plate 210, the angle 220, the bearing holder 230, the bolts 240, and the shaft 250 as components. FIG. 15 is a perspective view illustrating a schematic configuration of the base plate 210. FIG. 16 is a perspective view illustrating a schematic configuration of the angle 220. FIG. 17 is a perspective view illustrating a schematic configuration of the bearing holder 230.

The base plate 210 is a plate member, and has a rectangular shape in plan view. The base plate 210 has two screw holes 211 for fastening the angle 220 with the bolts 240. The screw holes 211 penetrate the base plate 210 in the thickness direction.

The angle 220 is a member to which the bearing holder 230 is attached. The angle 220 includes a first plate 221 and a second plate 222. The first plate 221 and the second plate 222 are connected to form a right angle. The second plate 222 has two through holes 223 associated with the screw holes 211 of the base plate 210. That is, the through holes 223 are holes in which the bolts 240 for attaching the angle 220 to the base plate 210 are inserted. The first plate 221 has the attachment hole 224 which penetrates the first plate 221 in the thickness direction and in which the bearing holder 230 is inserted.

The first plate 221 has screw holes 225 (four screw holes in this example) around the attachment hole 224. The screw holes 225 are holes for fastening the bearing holder 230 inserted in the attachment hole 224 to the angle 220 with the bolts 240. Two of the four screw holes 225 are arranged in the vertical direction, and the other two screw holes 225 are arranged in the horizontal direction. That is, the four screw holes 225 are arranged at intervals of 90 degrees in the circumferential direction of the attachment hole 224. The screw holes 225 penetrate the first plate 221 in the thickness direction of the first plate 221.

The bearing holder 230 is a component for holding the bearing 235. In this example, the bearing 235 is mounted on the inner side of the bearing holder 230 beforehand. The bearing 235 has a through hole 236 in which the shaft 250 is inserted. The bearing holder 230 includes a holder body 231 and a flange 232. The holder body 231 has a cylindrical shape. The flange 232 has an annular shape, and integrated with the outer periphery of an end portion of the holder body 231 in the axial direction. The holder body 231 is inserted in the attachment hole 224 of the angle 220. The outer diameter of the holder body 231 is approximately equal to the hole diameter of the attachment hole 224. The flange 232 has four through holes 233 associated with the screw holes 225 of the angle 220. That is, the through holes 233 are holes in which the bolts 240 for attaching the bearing holder 230 to the angle 220 are inserted. Each of the through holes 233 has a counterbore 234 that accommodates the head of an associated one of the bolts 240.

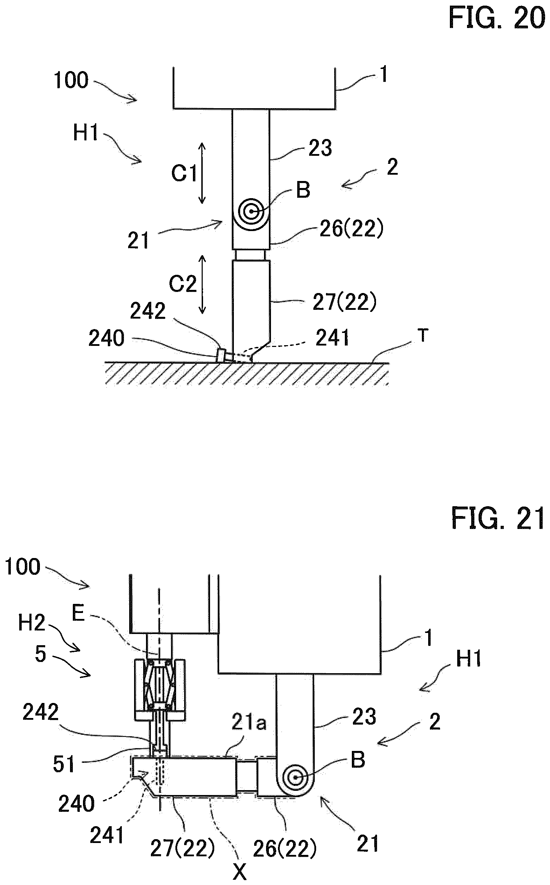

Each of the bolts 240 includes a bolt body 241 having an external thread and a columnar head 242 located at an end of the bolt body 241 (see FIG. 20 described later).

Actions of the hand 100 in the work will be hereinafter described in detail. In the following work, the controller 1200 moves the robot arm 1110 and the hand 100 in the manner described below.

### -Placing Work-

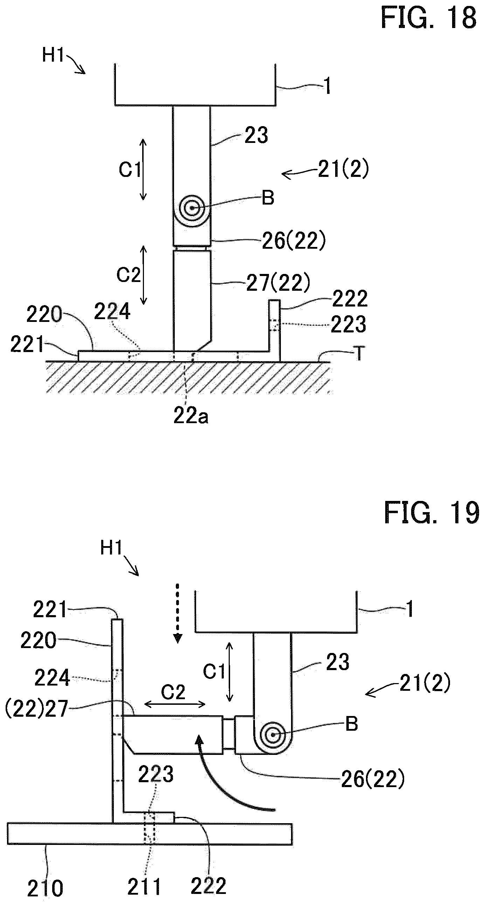

FIG. 18 is a schematic view illustrating a state where the first gripper 2 grips the angle 220. FIG. 19 is a schematic view illustrating a state where the first gripper 2 places the angle 220 on the base plate 210. In this placing work, the base plate 210 is located on a frame or the like while expanding horizontally.

First, the angle 220 on a tray T is gripped by the first gripper 2 of the first hand H1. Specifically, the angle 220 is placed on the tray T with the first plate 221 expanding horizontally and the second plate 222 expanding vertically. The robot arm 1110 moves the hand 100 so that the first gripper 2 is located at the position of the angle 220 on the tray T. At this time, the two first fingers 21 of the first gripper 2 are in the extended state and in the open state. As illustrated in FIG. 18, the first gripper 2 moves the two first fingers 21 such that the two first fingers 21 approach each other in the opening/closing directions A, and grips the angle 220 with the two first fingers 21.

Next, the first gripper 2 places the angle 220 gripped by the first gripper 2 on the base plate 210. Specifically, the first gripper 2 causes the two first fingers 21 gripping the angle 220 to bend. Specifically, the first fingers 21 bend such that the first plate 221 extends vertically and the second plate 222 is located at the bottom. Then, as illustrated in FIG. 19, the robot arm 1110 moves the hand 100 and places the angle 220 gripped by the first gripper 2 on a predetermined position of the base plate 210. Specifically, the robot arm 1110 places the angle 220 on the base plate 210 such that the axes of the through holes 223 of the angle 220 coincide with the axes of the screw holes 211 of the base plate 210.

Through the foregoing action, the placing work is completed.

### -First Fastening Work-

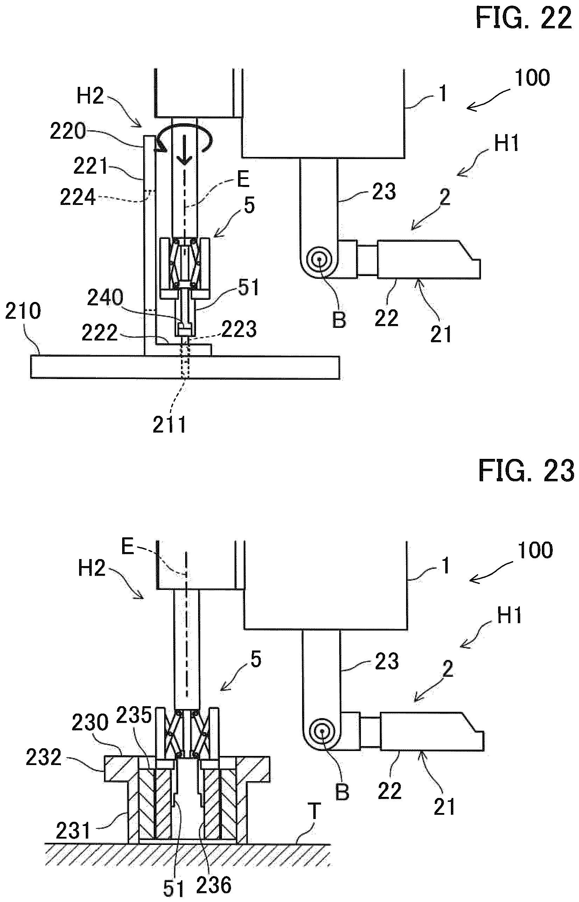

FIG. 20 is a schematic view illustrating a state where the bolt 240 is gripped by the first gripper 2. FIG. 21 is a schematic view illustrating a state where the second gripper 5 receives the bolt 240 from the first gripper 2. FIG. 22 is a schematic view illustrating a state where the second gripper 5 screws the bolt 240 into the screw hole 211.

First, the first gripper 2 of the first hand H1 grips the bolt 240 on the tray T. Specifically, the robot arm 1110 moves the hand 100 such that the first gripper 2 is located at the position of the bolt 240 on the tray T. At this time, the two first fingers 21 of the first gripper 2 are in the extended state and in the open state. The bolt 240 is located between the two first fingers 21. The first gripper 2 moves the two first fingers 21 such that the two first fingers 21 approach each other in the opening/closing directions A and, as illustrated in FIG. 20, the two first fingers 21 grip the bolt 240.

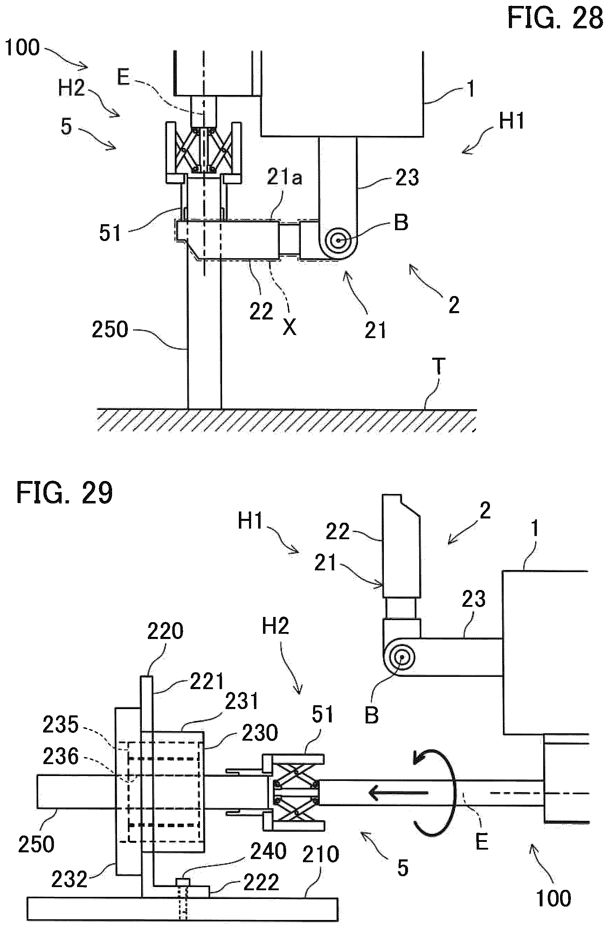

Next, the first gripper 2 delivers the bolt 240 to the second gripper 5 of the second hand H2. Specifically, the first gripper 2 causes the two first fingers 21 gripping the bolt 240 to bend. Specifically, the first gripper 2 causes the first fingers 21 to bend and moves the first part 22 to a position at which an imaginary region X defined by projecting the first part 22 in the opening/closing directions A interferes with the axis E. In FIG. 21, the imaginary region X is a region defined by projecting the first part 22 in a direction orthogonal to the drawing sheet. For easy illustration of the imaginary region X in FIG. 21, the imaginary region X is slightly larger than the first part 22 and indicated by a chain double-dashed line (the same holds for FIG. 28). As a result of moving the first part 22 to the position at which the imaginary region X interferes with the axis E, the bolt 240 is located near the axis E to which the three second fingers 51 advance or retract. Thereafter, the second hand H2 moves the second fingers 51 in the direction of the axis E such that the second fingers 51 are located at the position of the bolt 240 gripped by the first fingers 21. At this time, the three second fingers 51 are in the open state. The second hand H2 moves the three second fingers 51 toward each other and, as illustrated in FIG. 21, grips the bolt 240 with the three second fingers 51. The three second fingers 51 grip the head 242 of the bolt 240 with the axis of the bolt body 241 of the bolt 240 coinciding with the axis E.

Subsequently, the second hand H2 screws the bolt 240 into the screw hole 211. Specifically, the robot arm 1110 moves the hand 100 such that the bolt 240 gripped by the second gripper 5 is located above the screw hole 211 of the base plate 210, that is, above the through hole 223 of the angle 220. At this time, the robot arm 1110 makes the axis of the bolt body 241 substantially coincide with the axis of the through hole 223. The second hand H2 moves the second fingers 51 downward by the straight-moving actuator 6 while rotating the second fingers 51 by the rotation actuator 7. Accordingly, as illustrated in FIG. 22, the bolt 240 enters the through hole 223 and is further screwed into the screw hole 211. Lastly, the second hand H2 screws the bolt 240 into the screw hole 211 until the bolt 240 fixes the second plate 222 to the base plate 210.

This series of actions is performed on two screw holes 211 so that the angle 220 is finally fastened to the base plate 210 with the bolts.

Through the foregoing action, the first fastening work is completed.

### -Holder Inserting Work-

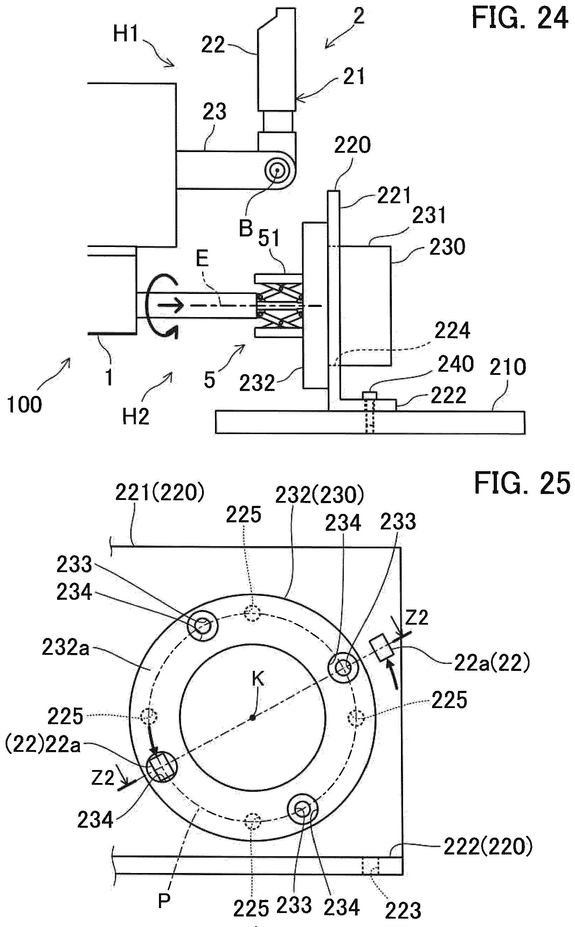

FIG. 23 is a schematic view illustrating a state where the second gripper 5 grips the bearing holder 230. FIG. 24 is a schematic view illustrating a state where the second gripper 5 inserts the bearing holder 230 into the angle 220.

First, the second gripper 5 of the second hand H2 grips the bearing holder 230 on the tray T. Specifically, the robot arm 1110 moves the hand 100 such that the second gripper 5 is located at the position of the bearing holder 230 on the tray T. The bearing holder 230 is placed tray T with the flange 232 located above the holder body 231. The three second fingers 51 of the second gripper 5 in the closed state are inserted into the through hole 236 of the bearing 235 in the holder body 231. The second hand H2 opens the three second fingers 51 and, as illustrated in FIG. 23, brings the three second fingers 51 into contact with the inner peripheral surface of the through hole 236. In this manner, the second gripper 5 grips the bearing holder 230 with the three second fingers 51.

Thereafter, the second hand H2 fits the bearing holder 230 in the attachment hole 224 of the angle 220. Specifically, the robot arm 1110 moves the hand 100 such that the bearing holder 230 gripped by the second gripper 5 is located at the side of the attachment hole 224 of the angle 220. At this time, the robot arm 1110 makes the axis E of the second gripper 5, that is, the axis of the bearing holder 230, substantially coincide with the axis of the attachment hole 224. Then, the robot arm 1110 moves the hand 100 such that the holder body 231 of the bearing holder 230 approaches the attachment hole 224. Subsequently, the second hand H2 moves the second fingers 51 straight in the direction of the axis E by the straight-moving actuator 6 while rotating the second fingers 51 by the rotation actuator 7. Accordingly, the holder body 231 gradually enters the attachment hole 224. Finally, as illustrated in FIG. 24, the second hand H2 inserts the bearing holder 230 into the attachment hole 224 until the flange 232 of the bearing holder 230 contacts the first plate 221.

Through the foregoing action, the holder inserting work is finished.

### -Positioning Work-

FIG. 25 is a view illustrating a state of the bearing holder 230 inserted in the angle 220 when seen from an end surface 232a.

First, the hand 100 pushes the first gripper 2 against a predetermined position on the end surface 232a of the flange 232 of the bearing holder 230. The end surface 232a of the flange 232 herein is a surface of an end portion of the flange 232 in the direction of an axis k of the bearing holder 230. Specifically, the robot arm 1110 moves the hand 100 such that the first gripper 2 is located at a side of the end surface 232a of the flange 232. At this time, the two first fingers 21 of the first gripper 2 are in the extended state and in the open state. One of the two first fingers 21 is moved by the opening/closing actuators 3 to a position corresponding to the predetermined position in the opening/closing directions A described above. Then, the robot arm 1110 moves the hand 100 toward the flange 232, and pushes one of the first fingers 21 against a predetermined position on the end surface 232a.

Thereafter, the first gripper 2 of the first hand H1 rotates the bearing holder 230 for positioning. Specifically, the robot arm 1110 rotates the hand 100 such that one of the first fingers 21 of the first gripper 2 rotates about the axis K of the bearing holder 230. Then, as illustrated in FIG. 25, when the first finger 21 pushed against the end surface 232a rotates to the position of the through hole 233, this first finger 21 enters (is engaged with) the counterbore 234 of the through hole 233. Subsequently, the robot arm 1110 further rotates the hand 100 such that the axis of the through hole 233 of the flange 232 coincides with the axis of the screw hole 225 of the angle 220. In this manner, the bearing holder 230 is positioned at a predetermined rotation position. FIG. 25 shows distal ends of the first fingers 21 (i.e., the distal ends 22a of the first parts 22). FIG. 25 does not show the bearing 235.

Through the foregoing action, the positioning work is completed.

### -Second Fastening Work-

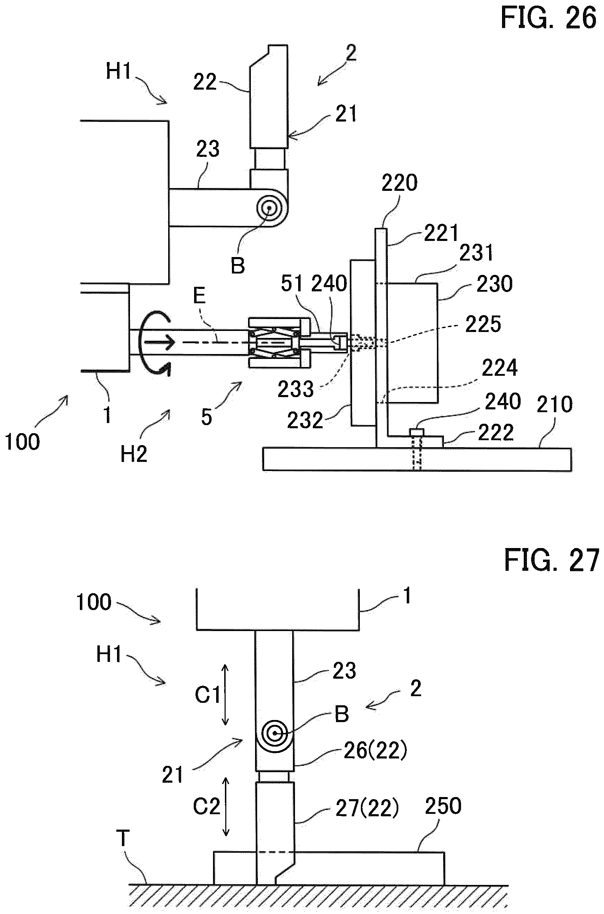

FIG. 26 is a schematic view illustrating a state where the second gripper 5 screws the bolt 240 into the screw hole 225 of the angle 220.

First, the first gripper 2 of the first hand H1 grips the bolt 240 on the tray T. Next, the first gripper 2 delivers the bolt 240 to the second gripper 5 of the second hand H2. These actions are similar to those in the first fastening work.

Subsequently, the second hand H2 screws the bolt 240 into the screw hole 225 of the angle 220. Specifically, the robot arm 1110 moves the hand 100 such that the bolt 240 gripped by the second gripper 5 is located at a side of the screw hole 225 of the angle 220, that is, the through hole 233 of the bearing holder 230. At this time, the robot arm 1110 makes the axis E of the second gripper 5, that is, the axis of the bolt 240, substantially coincide with the axis of the screw hole 225. Then, the robot arm 1110 moves the hand 100 such that the bolt 240 is slightly inserted in the through hole 233. Subsequently, the second hand H2 moves the second fingers 51 straight in the direction of the axis E by the straight-moving actuator 6 while rotating the second fingers 51 by the rotation actuator 7. Accordingly, as illustrated in FIG. 26, the bolt 240 enters the through hole 233, and is further screwed into the screw hole 225. Lastly, the second hand H2 screws the bolt 240 into the screw hole 225 until the bolt 240 fixes the flange 232 of the bearing holder 230 to the angle 220.

This series of actions is performed on the four screw holes 225 so that the bearing holder 230 is finally fastened to the angle 220 with the bolts.

Through the foregoing action, the second fastening work is completed.

### -Shaft Inserting Work-

FIG. 27 is a schematic view illustrating a state where the shaft 250 is gripped by the first gripper 2. FIG. 28 is a schematic view illustrating a state where the second gripper 5 receives the shaft 250 from the first gripper 2. FIG. 29 is a schematic view illustrating a state where the second gripper 5 inserts the shaft 250 into the bearing 235 of the bearing holder 230.

First, the first gripper 2 of the first hand H1 grips the shaft 250 on the tray T. Specifically, the robot arm 1110 moves the hand 100 such that the first gripper 2 is located at the position of the shaft 250 on the tray T. At this time, the two first fingers 21 of the first gripper 2 are in the extended state and in the open. The shaft 250 is located between the two first fingers 21. The first gripper 2 moves the two first fingers 21 such that the two first fingers 21 approach each other in the opening/closing directions A and, as illustrated in FIG. 27, the two first fingers 21 grip the shaft 250.

Next, the first gripper 2 delivers the shaft 250 to the second gripper 5 of the second hand H2. Specifically, the first gripper 2 causes the two first fingers 21 gripping the shaft 250 to bend. Specifically, the first gripper 2 causes the first fingers 21 to bend and moves the first part 22 to a position at which the imaginary region X of the first part 22 interferes with the axis E. As a result, the shaft 250 is located near the axis E to which the three fingers 51 advance or retract. Thereafter, the second hand H2 moves the second fingers 51 in the direction of the axis E such that the second fingers 51 are located at positions corresponding to the shaft 250 gripped by the first fingers 21. At this time, the three second fingers 51 are in the open state. The second hand H2 moves the three second fingers 51 such that the three second fingers 51 approach each other and, as illustrated in FIG. 28, grips the shaft 250 with the three second fingers 51. The three second fingers 51 grip an end portion of the shaft 250 with the axis of the shaft 250 coinciding with the axis E.

Next, the second gripper 5 inserts the shaft 250 into the bearing 235 of the bearing holder 230. Specifically, the robot arm 1110 moves the hand 100 such that the shaft 250 gripped by the second gripper 5 is located at a side of the bearing holder 230. At this time, the robot arm 1110 makes the axis E of the second gripper 5, that is, the axis of the shaft 250, substantially coincide with the axis of the screw hole 236 of the bearing 235. Then, the robot arm 1110 moves the hand 100 such that the shaft 250 is slightly pushed against a vicinity of the through hole 236 of the bearing 235. Subsequently, the second hand H2 moves the second fingers 51 straight in the direction of the axis E by the straight-moving actuator 6 while rotating the second fingers 51 by the rotation actuator 7. Accordingly, the shaft 250 gradually enters the through hole 236. At this time, the second hand H2 releases gripping of the shaft 250 by the second gripper 5 and pushes the shaft 250 in the direction of the axis E by the pushing block 91 of the push actuator 9 to thereby insert the shaft 250 in the through hole 236 in some cases. Lastly, the second hand H2 stops insertion of the shaft 250 at the time when the shaft 250 is inserted in the through hole 236 to a predetermined amount.

Through the foregoing action, the shaft inserting work is completed, and assembly work of the bearing unit 200 is completed.

The thus-configured hand 100 can achieve various actions with cooperation of the first gripper 2 and the second gripper 5. For example, in the assembly work of the bearing unit 200 described above, the bolt 240 or the shaft 250 can be delivered from the first gripper 2 to the second gripper 5. The first gripper 2 can guide the bolt 240 or the shaft 250 to a delivery posture in delivering the bolt 240 or the shaft 250 to the second gripper 5. In addition, in receiving the bolt 240 or the shaft 250 from the first gripper 2, the second gripper 5 grips the bolt 240 or the shaft 250 with the axis E located at a center of gripping (hereinafter such gripping will be referred to as "centering gripping"). Furthermore, the first gripper 2 and the second gripper 5 can grip the shaft 250 in cooperation.

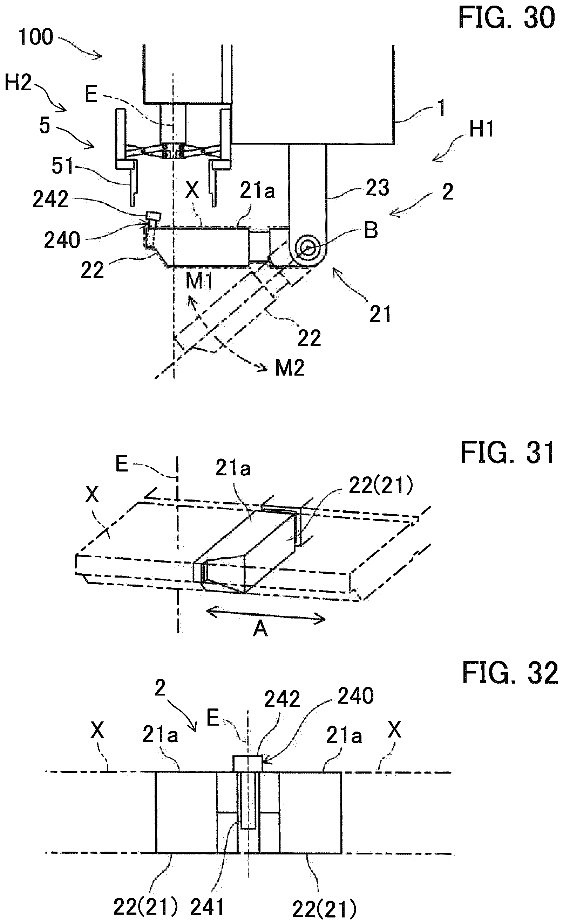

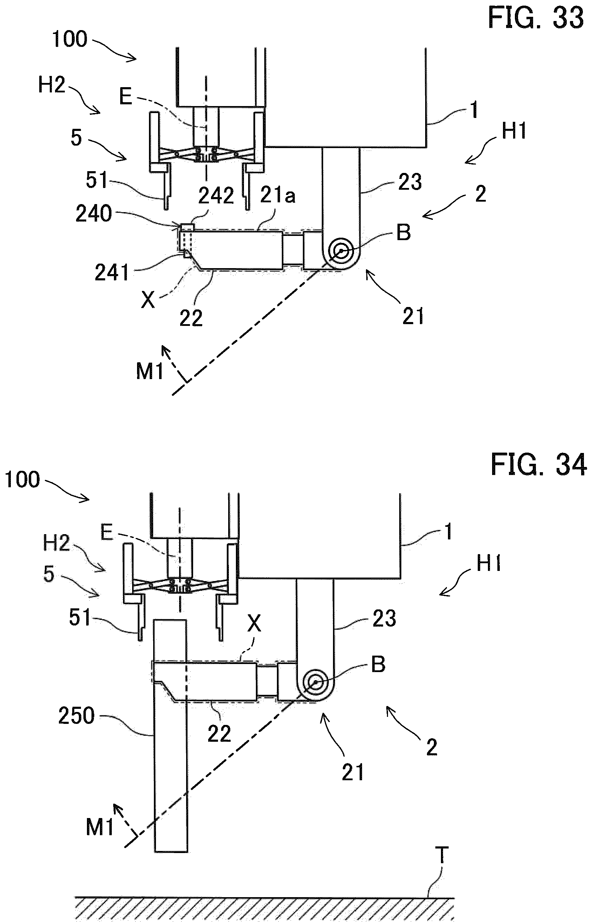

Delivery of the bolt 240 from the first gripper 2 to the second gripper 5 will now be described. FIG. 30 is a schematic view illustrating a state where the first gripper 2 performs a bending action in the bolt delivery action of the bolt 240. FIG. 31 is a perspective view schematically illustrating an imaginary region X of the first part 22. FIG. 32 is a schematic view of the first finger 21 that has performed a guide action in the delivery action of the bolt 240, seen from the distal end. FIG. 33 is a schematic view illustrating a state where the first gripper 2 has performed the guide action in the delivery action of the bolt 240.

First, as illustrated in FIG. 20, the first gripper 2 grips the bolt 240 on the tray T. This action will be referred to as a "gripping action." The first gripper 2 grips the bolt 240 with the first parts 22. The axis of the bolt 240 on the tray T is not parallel to the tray T because of the presence of the head 242. The first gripper 2 grips the bolt 240 with the extension directions C1 of the first parts 22 orthogonal to the tray T. Consequently, the first gripper 2 grips the bolt 240 in a state where the extension directions C1 of the first parts 22 is not orthogonal to the axis of the bolt 240.

After the gripping action, the first gripper 2 bends the first fingers 21 so that, as illustrated in FIGS. 30 and 31, the first parts 22 gripping the bolt 240 move to a position at which the imaginary region X interferes with the axis E (hereinafter referred to as an "interference position") M1. This action will be referred to as a "bending action." As illustrated in FIG. 31, the imaginary region X is defined with respect to the first part 22 of each first finger 21. Although FIG. 31 shows the imaginary region X as a finite region in order to ease understanding of the imaginary region X, the imaginary region X is a region extending infinitely in the opening/closing directions A. In this example, since the two first fingers 21 bend to the same bending angle (i.e., angle of the first part 22 with respect to the second part 23), the imaginary regions X of the two first part 22 are arranged side by side in the opening/closing directions A and are integrated. In FIG. 30, the imaginary region X is a region defined by projecting the first part 22 in a direction orthogonal to the drawing sheet. In FIG. 30, for easy illustration of the imaginary region X, the imaginary region X is slightly larger than the first part 22 and indicated by a chain double-dashed line (the same holds for the following drawings). The first part moves between the interference position M1 and a position of the first part 22 at which the imaginary region X does not interfere with the axis E (hereinafter referred to as a "non-interference position") M2. In FIG. 30, the position of the first part 22 indicated by the chain double-dashed line is a boundary between the interference position M1 and the non-interference position M2. A side of the chain double-dashed line toward the second gripper 5 is the interference position M1, and the opposite side is the non-interference position M2. In performing the gripping action described above, the first part 22 is at the non-interference position M2.

The first gripper 2 rotates the first parts 22 about the rotation axis B to a direction in which the first parts 22 approach the second gripper 5, and moves the first parts 22 to the interference position M1. The first gripper 2 moves the first parts 22 to a position at which the support surface 21a of the first finger 21 is orthogonal to the axis E (this position will be referred to as a "first bending position"). In the first bending position, the support surface 21a faces the second gripper 5. In the gripping action, since the first fingers 21 grip the bolt 240 in a state where the extension directions C1 of the first parts 22 are not orthogonal to the axis of the bolt 240, the axis of the bolt 240 is not parallel to the axis E at the time when the bending action is completed.

After the bending action is completed, the second gripper 5 receives the bolt 240 from the first parts 22 at the interference position M1. This action will be referred to as a "receiving action." On the other hand, the first gripper 2 delivers the bolt 240 to the second gripper 5 at the interference position M1. This action will be referred to as a "delivery action."

Before the receiving action, the second gripper 5 is prepared in a state capable of performing the receiving action. Specifically, since the second gripper 5 grips the bolt 240 by closing the second fingers 51 in the receiving action, the second fingers 51 are opened beforehand. In addition, the second hand H2 moves the second gripper 5 by the straight-moving actuator 6 and the rotation actuator 7 to a position close to the first parts 22 at the first bending position beforehand.

As the delivery action, the first gripper 2 guides the bolt 240 to a posture for delivering the bolt 240 to the second gripper 5 (hereinafter referred to as a "delivery posture") by the first parts 22 with the bolt 240 released from gripping by the first parts 22. This action will be referred to as a "guide action."

In the guide action, as illustrated in FIGS. 32 and 33, the first gripper 2 opens the first fingers 21 and releases gripping of the bolt 240 by the first fingers 21. At this time, the first gripper 2 opens the first fingers 21 to a degree at which the first gripper 2 can guide the posture of the bolt 240. Specifically, the first gripper 2 opens the first fingers 21 to a degree at which the head 242 of the bolt 240 is engaged with the top of the first part 22, that is, the support surface 21a, by self weight. More specifically, the first gripper 2 opens the first fingers 21 such that the distance between the two first parts 22 is larger than the outer diameter of the bolt body 241 and smaller than the outer diameter of the head 242. Accordingly, the bolt 240 is in the state of being hung from the first parts 22 with the axis substantially oriented vertically. This posture of the bolt 240 is a delivery posture. The first parts 22 determine the position of the bolt 240 in the direction of the axis E while guiding the bolt 240 to the delivery posture.

Thereafter, the second gripper 5 performs a receiving action. The second hand H2 operates the opening/closing mechanism 8 to move the second fingers 51 to a direction in which the second fingers 51 are closed. In the second gripper 5, the second fingers 51 open and close while drawing a trajectory in accordance with the link mechanism 52. In this example, the distal end of each of the second fingers 51 draws an arc trajectory such that the distal end of the second finger 51 is at the most advancing side in the direction of the axis E in the state where the second fingers 51 are fully closed. The second fingers 51 at start of the receiving action are in an open state, and close to the support surfaces 21a of the first parts 22. When the second gripper 5 closes the second fingers 51 in order to grip the bolt 240, the second fingers 51 contact the support surfaces 21a of the first parts 22 in the middle of being closed. The damping mechanism 10 of the second hand H2 is elastically deformed so that the second gripper 5 can be thereby displaced to the retracting side in the direction of the axis E. That is, the elastic deformation of the damping mechanism 10 enables the second fingers 51 to move in a closing direction while sliding on the support surfaces 21a. In this manner, as illustrated in FIG. 21, the second fingers 51 can reliably grip the head 242 of the bolt 240 on the support surfaces 21a.

In gripping the bolt 240, the second gripper 5 performs centering gripping of gripping the bolt 240 with the axis E located at a center of gripping. The outer shape of the bolt 240 guided to the delivery posture seen in the direction of the axis E is a circular shape of the head 242. Thus, when the head 242 is subjected to centering gripping by the second gripper 5, the head 242 is gripped such that the axis of the bolt 240 coincides with the axis E.

Through the delivery of the bolt 240 from the first gripper 2 to the second gripper 5 as described above, the second gripper 5 can grip the bolt 240 placed on the tray T such that the head 242 is gripped with the axis of the bolt 240 coinciding with the axis E. The second gripper 5 grips the bolt 240 in such a state so that the second hand H2 can smoothly shift to next screwing work of the bolt 240.

In the hand 100, these actions can be achieved by the first gripper 2 and the second gripper 5 included in one hand 100. As a result, the amount of movement of the robot arm 1110 can be reduced. In addition, necessity for another robot arm other than the robot arm 1110, a device, a jig, or other devices is reduced.

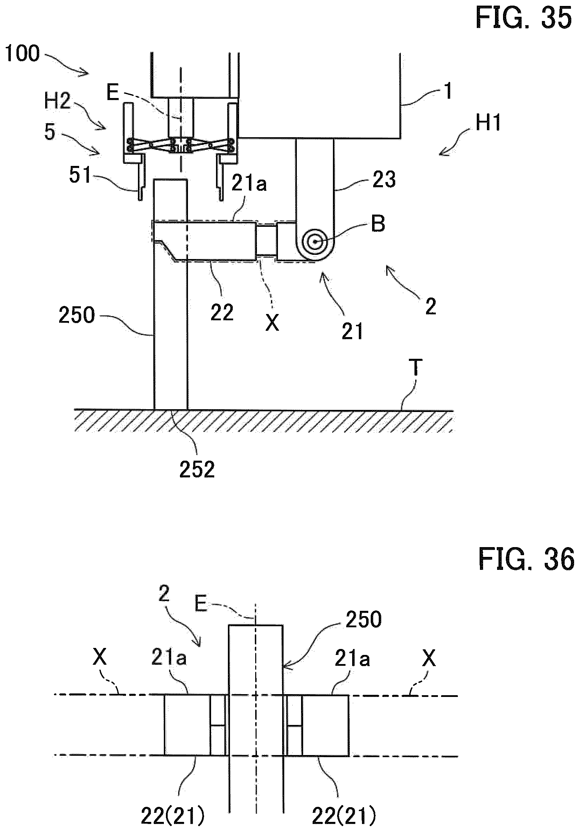

Next, delivery of the shaft 250 from the first gripper 2 to the second gripper 5 will be described. FIG. 34 is a schematic view illustrating a state where the first gripper 2 has performed a bending action in a shaft delivery action of the shaft 250. FIG. 35 is a schematic view illustrating a state where the first gripper 2 has placed the shaft 250 on the tray T before the guide action in the delivery action of the shaft 250. FIG. 36 is a schematic view of the first finger 21 that has performed the guide action in the delivery action of the shaft 250, seen from the distal end thereof.

First, as illustrated in FIG. 27, the first gripper 2 grips the shaft 250 on the tray T. The first gripper 2 grips the shaft 250 with the first parts 22. The axis of the shaft 250 on the tray T is substantially parallel to the tray T. The first gripper 2 grips the shaft 250 with the extension directions C1 of the first parts 22 being orthogonal to the tray T. Consequently, the first gripper 2 grips the shaft 250 in a state where the extension directions C1 of the first parts 22 are substantially orthogonal to the axis of the shaft 250.

After the gripping action, the first gripper 2 causes the first fingers 21 to bend so that, as illustrated in FIG. 34, the first gripper 2 moves the first parts 22 to the interference position M1, specifically, the first bending position, while gripping the shaft 250. In the gripping action, since the first fingers 21 grip the shaft 250 in the state where the extension directions C1 of the first parts 22 are substantially orthogonal to the axis of the shaft 250, the axis of the shaft 250 is substantially parallel to the axis E when the bending action is completed. The shaft 250 is separated from the tray T.

When the bending action is completed, the second gripper 5 receives the shaft 250 from the first parts 22 at the interference position M1.

At this time, the first gripper 2 performs a guide action. In the guide action, as illustrated in FIG. 35, the hand 100 is moved by the robot arm 1110 to a position at which an end surface 252 of the shaft 250 in the direction of the axis of the shaft 250 (end surface in contact with the tray T in the direction of the axis) contacts the tray T. As illustrated in FIG. 36, the first gripper 2 opens the first fingers 21 and releases gripping of the shaft 250 by the first fingers 21. At this time, the first gripper 2 opens the first fingers 21 to a degree at which the first gripper 2 can guide the posture of the shaft 250. Specifically, the first gripper 2 opens the first fingers 21 such that the distance between the two first parts 22 is slightly larger than the outer diameter of the shaft 250 and a tilt of the shaft 250 to a direction in which the two first part 22 face each other is restricted. The end surface 252 of the shaft 250 in the direction of the axis of the shaft 250 is orthogonal to the axis of the shaft 250. Accordingly, the shaft 250 stands by itself to be substantially orthogonal to the tray T by the self weight thereof. Even when the shaft 250 is about to fall over, a tilt of the shaft 250 to the direction in which at least two first parts 22 face each other is restricted, and the shaft 250 stands by itself. That is, the first gripper 2 guides the posture of the shaft 250 such that the shaft 250 stands on the tray T with the axis oriented substantially vertically and a part of the shaft 250 projects from the support surfaces 21a toward the second gripper 5. This posture of the shaft 250 is a delivery posture. In the manner described above, the first gripper 2 releases gripping of the shaft 250 by the first parts 22 to thereby guide the shaft 250 to the delivery posture by the first parts 22 with the shaft 250 placed on the tray T as the support base.

Subsequently, the second gripper 5 performs a receiving action. The second hand H2 operates the opening/closing mechanism 8 to move the second fingers 51 to a direction in which the second fingers 51 are closed. As described above, the second fingers 51 move to the closing direction while sliding on the support surfaces 21a. As illustrated in FIG. 28, the second fingers 51 grip a portion of the shaft 250 projecting from the support surfaces 21a.

In addition, in gripping the shaft 250, the second gripper 5 performs centering gripping of gripping the shaft 250 with the axis E located at a center of gripping. The outer shape of the shaft 250 guided to the delivery posture seen in the direction of the axis E is a circular shape. Thus, when the second gripper 5 performs centering gripping of the shaft 250, the shaft 250 is gripped such that the axis of the shaft 250 coincides with the axis E.

Through the delivery of the shaft 250 from the first gripper 2 to the second gripper 5 as described above, the shaft 250 laying on the tray T is finally gripped by the second gripper 5 with the axis of the shaft 250 coinciding with the axis E. Since the second gripper 5 grips the shaft 250 in this state, the second hand H2 can smoothly shift to next inserting work of the shaft 250.

In the hand 100, these actions can be achieved by the first gripper 2 and the second gripper 5 included in one hand 100. Accordingly, the amount of movement of the robot arm 1110 can be reduced. In addition, necessity for another robot arm other than the robot arm 1110, a device, a jig, or other devices is reduced.

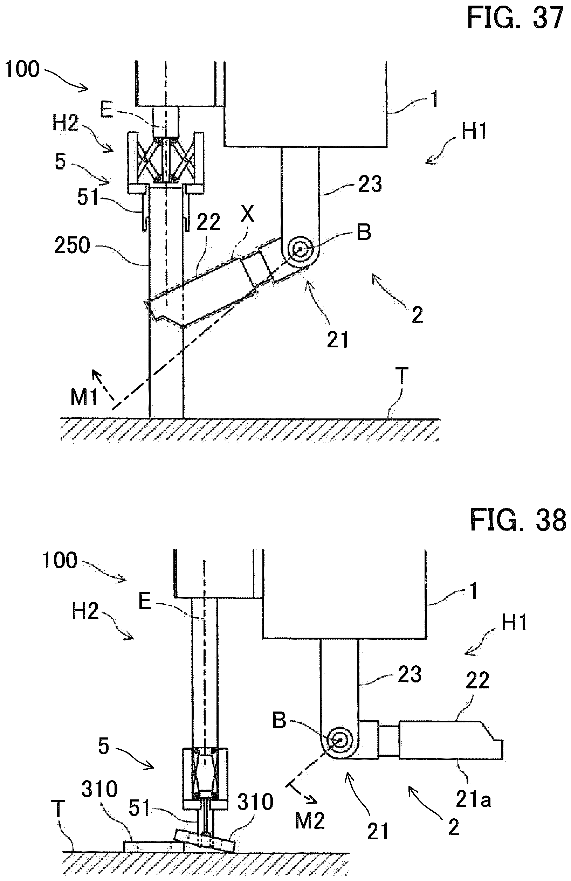

Next, cooperative gripping of the shaft 250 by the first gripper 2 and the second gripper 5 will be described. FIG. 37 is a schematic view illustrating a state where the first gripper 2 and the second gripper 5 have performed a cooperative gripping action.

As described above, the second gripper 5 grips an end portion of the shaft 250. Thus, if the shaft 250 is gripped only by the second gripper 5, the shaft 250 is in the state of being gripped in a cantilever manner. In view of this, the hand 100 grips the shaft 250 by the first gripper 2 as well as the second gripper 5 to thereby enhance stability of gripping of the shaft 250. This gripping of the workpiece with cooperation of the first gripper 2 and the second gripper 5 will be referred to as "cooperative gripping."

Specifically, after the receiving action of the shaft 250 by the second gripper 5 described above is completed, the first gripper 2 grips the shaft 250 with the bent first fingers 21. At this time, the first gripper 2 can grip any portion of the shaft 250.

In this example, as illustrated in FIG. 37, the first gripper 2 moves the first parts 22 to a position that is at the interference position M1 and further away from the second gripper 5 than at the first bending position (hereinafter referred to as a "second bending position"). The second bending position is a position at which the workpiece gripped by the second gripper 5, that is, the shaft 250, can be gripped by the first parts 22. The bending angle of the second bending position from the extended state (i.e., rotation angle about the rotation axis B) is smaller than the bending angle of the first bending position.

The first parts 22 grip the shaft 250 at the second bending position. In this manner, the first parts 22 grip the shaft 250 at the second bending position so that relatively separated two portions of the shaft 250 can be gripped by the first gripper 2 and the second gripper 5.

This cooperative gripping of the shaft 250 by the first gripper 2 and the second gripper 5 enables stable gripping of the shaft 250. The cooperative gripping is effective especially for a workpiece, such as the shaft 250, heavier than the bolt 240 or other parts. Then, the posture of the shaft 250 is changed to a state where the axis of the shaft 250 is oriented horizontally, and the shaft 250 is inserted in the bearing 235. At this time, in the case of gripping the shaft 250 in a cantilever manner only by the second gripper 5, the axis of the shaft 250 might be tilted with respect to the axis E by the self weight of the shaft 250. The cooperative gripping is also effective for performing such work. Since the first fingers 21 bend, the shaft 250 can be gripped with high flexibility.

In the hand 100, these actions can be achieved by the first gripper 2 and the second gripper 5 included in one hand 100. As a result, necessity for another robot arm other than the robot arm 1110, a device, a jig, or other devices is reduced.

The hand 100 can also achieve various actions with cooperation of the first gripper 2 and the second gripper 5 in addition to actions included in the assembly work of the bearing unit 200. For example, the hand 100 achieves a grip adjusting action of temporarily placing a workpiece gripped by the second gripper 5 on the bent first fingers 21 and then adjusting gripping of the workpiece, and a relative moving action of gripping two combined workpieces by the first gripper 2 and the second gripper 5, respectively, and changing relative positions of the two workpieces. The actions will now be described below.

### -Grip Adjusting Action-

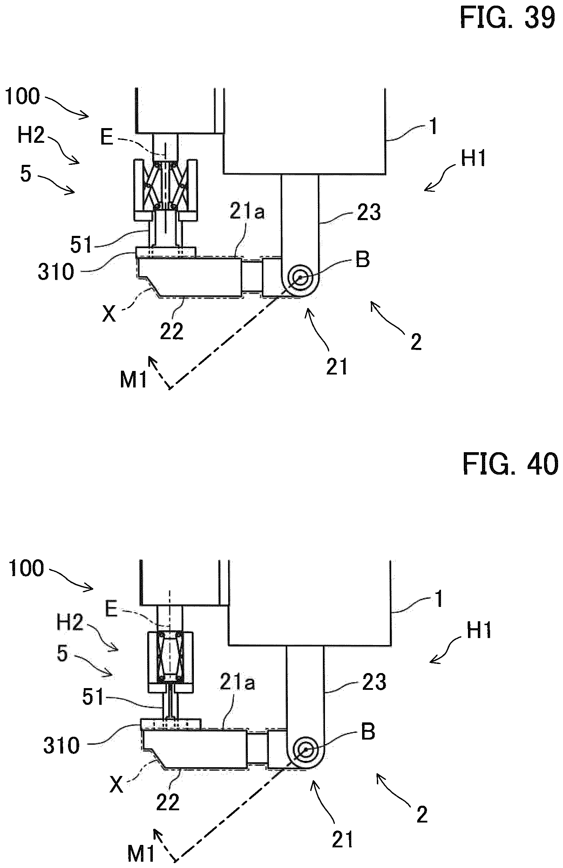

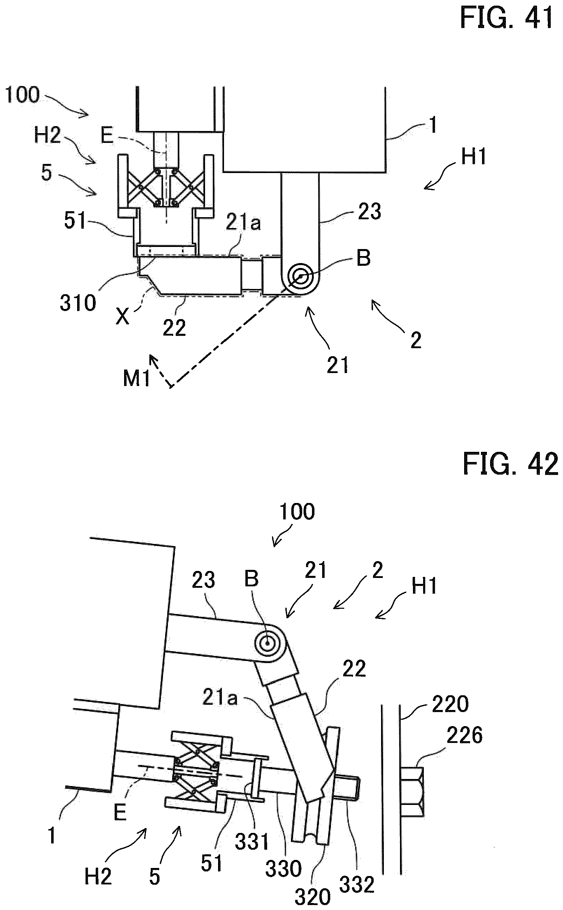

FIG. 38 is a schematic view illustrating a state where the second gripper 5 performs first gripping of rings 310 in a grip adjusting action. FIG. 39 is a schematic view illustrating a state where the first gripper 2 has performed a bending action in the grip adjusting action. FIG. 40 is a schematic view illustrating a state where the second gripper 5 temporarily places the rings 310 on the first part 22 in the grip adjusting action. FIG. 41 is a schematic view illustrating a state where the second gripper 5 has performed second gripping of the rings 310 in the grip adjusting action.

First, the second gripper 5 grips the rings 310 on the tray T. In this example, each of the rings 310 has a cylindrical shape. That is, the outer peripheral surface and the inner peripheral surface of each ring 310 are circumferential surfaces concentric with the axis of the ring 310. Two rings 310 are present on the tray T, and one of the rings 310 is overlaid with the other ring 310 in a tilted state. The second hand H2 moves the second gripper 5 to the position of the ring 310, specifically the upper ring 310, on the tray T by the straight-moving actuator 6 and the rotation actuator 7. At this time, the three second fingers 51 are fully closed. As illustrated in FIG. 38, the second hand H2 inserts the three second fingers 51 in the ring 310. Thereafter, the second hand H2 opens the three second fingers 51 by the opening/closing mechanism 8. The second gripper 5 grips the ring 310 from the inside thereof by an opening action of the second fingers 51. Centering gripping of the second gripper 5 causes the axis of the ring 310 to substantially coincide with the axis E of the second gripper 5. The first gripper 2 previously causes the first fingers 21 to bend such that the first parts 22 are located at a position which is at the non-interference position M2 and at which the support surfaces 21a are orthogonal to the axis E and faces downward (hereinafter this position will be referred to as a "third bending position").

Subsequently, the second hand H2 retracts the second gripper 5 gripping the ring 310 in the direction of the axis E by the straight-moving actuator 6 and the rotation actuator 7. Thereafter, as illustrated in FIG. 39, the first gripper 2 causes the first fingers 21 to bend, and moves the first parts 22 to the interference position M1, specifically, the first bending position. Accordingly, the first parts 22 are located below the ring 310. In this example, the first parts 22 that have moved to the first bending position contact the ring 310 gripped by the second gripper 5 from below. That is, the first parts 22 support the ring 310 from below.

Then, the second gripper 5 releases gripping of the ring 310, and as illustrated in FIG. 40, temporarily places the ring 310 on the first parts 22 at the interference position M1.

Thereafter, the second gripper 5 grips the ring 310 placed on the first parts 22 again. Specifically, the second hand H2 retracts the second gripper 5 in the direction of the axis E by the straight-moving actuator 6 and the rotation actuator 7, and pulls the second fingers 51 from the inside of the ring 310. Then, the second hand H2 fully opens the second fingers 51 by the opening/closing mechanism 8, and then, advances the second gripper 5 in the direction of the axis E by the straight-moving actuator 6 and the rotation actuator 7 so that the second gripper 5 approaches the first parts 22. Thereafter, the second hand H2 closes the three second fingers 51 by the opening/closing mechanism 8. As illustrated in FIG. 41, the second gripper 5 grips the ring 310 from outside by the closing action of the second fingers 51. At this time, centering gripping of the second gripper 5 causes the axis of the ring 310 to coincide with the axis E of the second gripper 5.

In such a grip adjusting action, the second gripping by the second gripper 5 is performed on a workpiece placed on the first parts 22 with stability so that the axis E of the second gripper 5 can thereby accurately coincide with the center of the workpiece. For example, in the case where the rings 310 are placed with a tilt on the tray T as in the example described above, although the axis E of the second gripper 5 substantially coincides with the axis of the ring 310, some shift might occur in the first gripping. Since the ring 310 is temporarily placed on the first parts 22 after the first gripping, the ring 310 can be placed again in a relatively stable state. Second gripping performed in this state enables the axis E of the second gripper 5 to more closely coincide with the axis of the ring 310.

Alternatively, a portion of the workpiece to be gripped by the second gripper 5 can be made different between the first gripping and the second gripping by the grip adjusting action. For example, in a case where the way of gripping the workpiece is previously determined for work subsequent to the grip adjusting action, in gripping the workpiece from the tray T or another place, the workpiece cannot be gripped by a desired way or the workpiece can be more easily gripped the way of gripping the workpiece different from the desired way in some cases. In a case where it is necessary to previously grip the ring 310 from outside for work next to the grip adjusting action, the example of the ring 310 described above corresponds to a case where the ring 310 is more easily gripped from the inside in gripping the ring 310 from the tray T. Note that gripping of the work subsequent to the grip adjusting action may be gripping of the ring 310 from the inside, and easy gripping from the tray T may be gripping of the ring 310 from the outside.

In the hand 100, these actions can be achieved by the first gripper 2 and the second gripper 5 included in one hand 100. Accordingly, the amount of movement of the robot arm 1110 can be reduced. In addition, necessity for another robot arm other than the robot arm 1110, a device, a jig, or other devices is reduced.

### -Relative Moving Action-

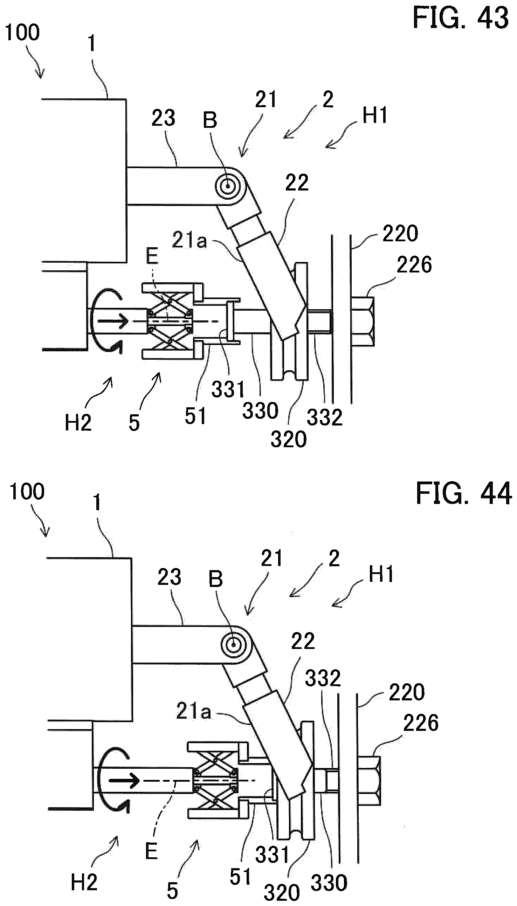

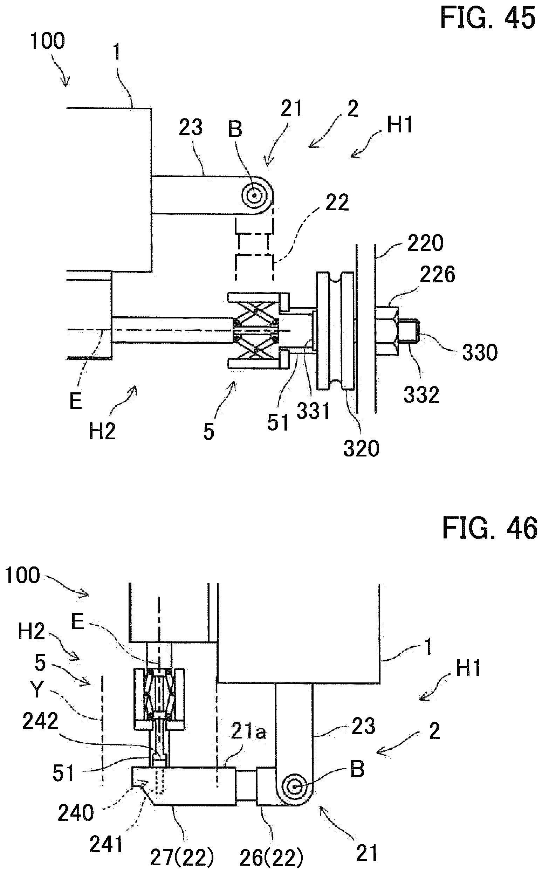

A relative moving action will now be described using, as an example, the case of attaching a pulley 320 in which a shaft 330 is inserted to the angle 220. FIG. 42 is a schematic view illustrating a state where the pulley 320 and the shaft 330 cooperatively gripped by the first gripper 2 and the second gripper 5 are conveyed to a combining position to the angle 220. FIG. 43 is a schematic view illustrating a state where the first gripper 2 and the second gripper 5 grip the pulley 320 and the shaft 330 in the relative moving action. FIG. 44 is a schematic view illustrating a state where the second gripper 5 is moved so that the shaft 330 is moved relative to the pulley 320 in the relative moving action. FIG. 45 is a schematic view illustrating a state where the second gripper 5 has moved the pulley 320 and the shaft 330 after the relative moving action.

The shaft 330 is inserted in the axis hole of the pulley 320. The pulley 320 and the shaft 330 are concentrically combined. A head 331 is disposed at an end of the shaft 330. The other end of the shaft 330 has an external thread 332.

In the pulley 320 (an example of a first workpiece) and the shaft 330 (an example of a second workpiece) that are combined together, the first gripper 2 grips the pulley 320, whereas the second gripper 5 grips the shaft 330. The second gripper 5 grips the head 331 with the axis of the shaft 330 coinciding with the axis E. The first gripper 2 grips the outer peripheral surface of the pulley 320 with the first parts 22 of the first fingers 21 in a bent state.

As illustrated in FIG. 42, the hand 100 conveys the pulley 320 and the shaft 330 to the combining position to the angle 220 in a state where the first gripper 2 grips the pulley 320 and the second gripper 5 grips the shaft 330 in the combined pulley 320 and the shaft 330.

As illustrated in FIG. 43, the first gripper 2 and the second gripper 5 are located at a side of the angle 220 while gripping the pulley 320 and the shaft 330. The angle 220 is provided with a nut 226. The nut 226 has an internal thread (not shown) to be screwed with the external thread 332 of the shaft 330. The angle 220 has a through hole (not shown) at a position corresponding to the nut 226. The axis E of the second gripper 5, that is, the axis of the shaft 330, substantially coincides with the axis of the nut 226.

From this state, the second hand H2 moves the second gripper 5 straight to the advancing side in the direction of the axis E while rotating the second gripper 5 about the axis E by the straight-moving actuator 6 and the rotation actuator 7. The second gripper 5 moves in the direction of the axis E while gripping the shaft 330. At this time, the first gripper 2 is stopped in the state of gripping the pulley 320. Accordingly, the shaft 330 moves in the direction of the axis E with respect to the pulley 320. In the direction of the axis E, the head 331 of the shaft 330 approaches the pulley 320. That is, relative positions of the pulley 320 and the shaft 330 change. The external thread 332 of the shaft 330 is screwed into the internal thread to the nut 226.

As illustrated in FIG. 44, when the shaft 330 is inserted in the pulley 320 to a predetermined position, the second gripper 5 is temporarily stopped. The first gripper 2 releases gripping of the pulley 320.

Thereafter, the second hand H2 moves the second gripper 5 to the advancing side in the direction of the axis E while rotating the second gripper 5 about the axis E by the straight-moving actuator 6 and the rotation actuator 7 again. The pulley 320 moves straight to the advancing side in the direction of the axis E while rotating about the axis E together with the shaft 330. As illustrated in FIG. 45, when the shaft 330 is inserted in the nut 226 to a predetermined length, the second hand H2 stops rotation or straight movement of the second gripper 5. Subsequently, the second gripper 5 releases gripping of the shaft 330.

In the manner described above, in the relative moving action, relative positions of two workpieces can be changed by the first gripper 2 and the second gripper 5 of the hand 100. Accordingly, the amount of movement of the robot arm 1110 can be reduced. As a result, necessity for another robot arm other than the robot arm 1110, a device, a jig, or other devices is reduced.

As described above, the hand 100 includes the first gripper 2 and the second gripper 5, the second gripper 5 grips a workpiece (e.g., the bolt 240 or the shaft 250) located on a predetermined axis E, the first gripper 2 includes the two first fingers 21 that are opened and closed in a predetermined opening/closing direction A, and each of the first fingers 21 includes the first part 22 including the distal end and the second part 23 including the proximal end, and is bent or curved such that the first part 22 moves between the interference position M1 at which the imaginary region X defined by projecting the first part 22 in the opening/closing direction A interferes with the axis E and the non-interference position M2 at which the imaginary region X does not interfere with the axis E.

With this configuration, the second gripper 5 grips the workpiece on the axis E and the two first fingers 21 are bent or curved so that the first parts 22 of the first fingers 21 can be thereby moved to the interference position M1. Since the two first fingers 21 are allowed to be opened and closed, the first parts 22 can also be opened and closed. That is, the first parts 22 are not only opened and closed at the non-interference position M2 but also opened and closed at the interference position M1. For example, the first parts 22 can dleliver the workpiece gripped at the non-interference position M2 to the interference position M1, can release gripping of the workpiece at interference position M1, and can guide or support the workpiece at the interference position M1. Accordingly, the first gripper 2 and the second gripper 5 can achieve various actions in cooperation.

The first gripper 2 moves the first parts 22 to the interference position M1 while gripping the workpiece with the first parts 22 of the two first fingers 21, and the second gripper 5 receives the workpiece from the first parts 22 at the interference position M1.

That is, the control method of the hand 100 includes: gripping a workpiece by the first gripper 2 with the first parts 22 of the two first fingers 21; moving the first parts 22 to the interference position M1 by the first gripper 2 with the workpiece gripped by the first gripper 2; receiving the workpiece by the second gripper 5 from the first parts 22 located at the interference position M1.

With this configuration, since the first fingers 21 that are openable and closable are bent or curved, the first gripper 2 can deliver the workpiece to the second gripper 5 by moving the workpiece gripped by the first parts 22 of the first fingers 21 to the interference position M1 and releasing gripping of the workpiece.

In delivering the workpiece to the second gripper 5 at the interference position M1, the first gripper 2 guides the workpiece to the delivery posture for delivering the workpiece to the second gripper 5 by the first parts 22 with the workpiece released from gripping by the first parts 22.

With this configuration, the first parts 22 release gripping of the workpiece for delivering the workpiece to the second gripper 5 at the interference position M1, and then further guide the posture of the workpiece. Accordingly, the workpiece can be delivered to the second gripper 5 with stability.

The first gripper 2 guides the workpiece to the delivery posture by engaging a part of the workpiece (e.g., the head 242 of the bolt 240) with upper portions of the first parts 22 by the self weight of the workpiece.

With this configuration, the first gripper 2 can guide the workpiece to the delivery posture by utilizing the self weight of the workpiece. That is, the first gripper 2 can guide the posture of the workpiece with a simple action.

The first gripper 2 guides the workpiece to the delivery posture by the first parts 22 with the workpiece (e.g., the shaft 250) placed on the tray T (support base) by releasing gripping of the workpiece by the first parts 22.

With this configuration, the first gripper 2 can guide the workpiece to the delivery posture by utilizing the self weight of the workpiece and the tray T. That is, the first gripper 2 can guide the posture of the workpiece with a simple action.

In receiving the workpiece from the first parts 22, the second gripper 5 grips the workpiece with the axis E located at a center of gripping.

With this configuration, the second gripper 5 can perform positioning of the workpiece when receiving the workpiece, as well as simply receiving the workpiece from the first gripper 2.

The second gripper 5 grips the workpiece, and the first gripper 2 grips the workpiece gripped by the second gripper 5 with the first fingers 21 that are bent or curved.

That is, the control method of the hand 100 includes: gripping the workpiece by the second gripper 5; and gripping, by the first gripper 2, the workpiece gripped by the second gripper 5 with the first fingers 21 that are bent or curved.

With this configuration, since the first fingers 21 are bent or curved such that the first parts 22 move to the interference position M1, the workpiece gripped by the second gripper 5 can be gripped by the first fingers 21. That is, the first gripper 2 and the second gripper 5 can grip the workpiece in cooperation. As a result, stability in gripping the workpiece is enhanced.

The first gripper 2 moves the first parts 22 to the interference position M1, and the second gripper 5 temporarily places the workpiece gripped by the second gripper 5 on the first parts 22 at the interference position M1, and grips the workpiece placed on the first parts 22 again.

That is, the control method of the hand 100 includes: moving the first parts 22 to the interference position M1 by the first gripper 2; temporarily placing the workpiece by the second gripper 5 on the first parts 22 located at the interference position M1 with the workpiece gripped by the second gripper 5; and gripping the workpiece placed on the first parts 22 by the second gripper 5 again.

With this configuration, the second gripper 5 can adjust gripping of the workpiece with one hand 100. Accordingly, the second gripper 5 can adjust gripping of the workpiece with more stability or adjust gripping of the workpiece by changing portions to be gripped by the second gripper 5.

The second gripper 5 is movable in the direction of the axis E, the first gripper 2 grips the first workpiece (e.g., pulley 320) with the first fingers 21 that are bent or curved, the first workpiece being combined with the second workpiece (e.g., shaft 330), and the second gripper 5 changes relative positions of the first workpiece and the second workpiece by moving in the direction of the axis E while gripping the second workpiece.

That is, the control method of the hand 100 includes: gripping the first workpiece in the combined first workpiece and the second workpiece by the first gripper 2 with the first fingers 21 that are bent or curved; gripping the second workpiece by the second gripper 5; and moving the second gripper 5 in the direction of the axis E with the second workpiece gripped by the the second gripper 5 to thereby change the relative positions of the first workpiece and the second workpiece.

With this configuration, since the first fingers 21 are bent or curved such that the first parts 22 move to the interference position M1, the workpiece gripped by the second gripper 5 can be gripped by the first fingers 21. Accordingly, in the combined first and second workpieces, the first workpiece can be gripped by the first gripper 2 with the first fingers 21 that are bent or curved, and the second workpiece can be gripped by the second gripper 5. In this state, the second gripper 5 moves the second workpiece in the direction of the axis E, thereby changing relative positions of the first workpiece and the second workpiece. Such a complicated action can be achieved with one hand 100.

The hand 100 includes the first gripper 2 and the second gripper 5, the first gripper 2 delivers the workpiece gripped by the first gripper 2 to the second gripper 5, and the second gripper 5 receives the workpiece from the first gripper 2 on the predetermined axis E and grips the workpiece with the axis E located at a center of gripping.

With this configuration, the second gripper 5 can perform positioning of the workpiece when receiving the workpiece, as well as simply receiving the workpiece from the first gripper 2.

### OTHER EMBODIMENTS

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the embodiment described above may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the hand 100 may be incorporated in a device other than the robot 1100.

Although the first fingers 21 included the first parts 22, the second parts 23, and the joints 24 and are bendable, the first fingers 21 may be curved.

The second hand H2 may not include the rotation actuator 7 and/or the push actuator 9. The straight-moving actuator 6 and the rotation actuator 7 may not be integrated, and may be separated. Although the push actuator 9 is integrated with the straight-moving actuator 6, the push actuator 9 may be separated from the straight-moving actuator 6.

In regard to the guide action of the first gripper 2, the first gripper 2 grips the workpiece and perform the bending action, and then performs the guide action, in the above description. Alternatively, the first gripper 2 does not need to perform any of the gripping of the workpiece and the bending action, and may perform only the guide action of the workpiece. For example, in adjusting gripping of the workpiece gripped by the second gripper 5 (irrespective of whether the workpiece has been received from the first gripper 2 or not), such as the shaft 250, the first gripper 2 may perform only the guide action of the shaft 250. That is, the first gripper 2 guides the workpiece by the first parts 22 of the two first fingers 21 to the posture for gripping by the second gripper 5 in the state where the first parts 22 have moved to the interference position M1. The control method of the hand 100 includes: guiding the workpiece by the first gripper 2 with the first parts 22 of the two first fingers 21 to the posture for gripping the workpiece by the second gripper 5 in the state where the first parts 22 have moved to the interference position M1; and gripping, by the second gripper 5, the workpiece guided by the first gripper 2. Such a configuration can also achieve stable gripping of the workpiece by the second gripper 5 with one hand 100 with cooperation of the first gripper 2 and the second gripper 5.

In the cooperative gripping action, the workpiece gripped by the first gripper 2 and the second gripper 5 may not be a single workpiece, and may be a composite workpiece in which workpieces are combined. That is, the action of gripping the combined pulley 320 and shaft 330 by the first gripper 2 and the second gripper 5 as illustrated in FIG. 42 also corresponds to the cooperative gripping action.

The hand 100 can be considered as follows. As illustrated in FIG. 46, the hand 100 may include the first gripper 2 and the second gripper 5, the second gripper 5 may grip the workpiece located on the predetermined axis E, the first gripper 2 may include the two first fingers 21 that are opened and closed, each of the first fingers 21 may include the first part 22 including the distal end and the second part 23 including the proximal end and may be bent or curved such that the first part 22 move between the position at which the first part 22 interfere with the imaginary region Y defined by projecting the second gripper 5 in the direction of the axis E and the position at which the first part 22 do not interfere with the imaginary region Y. In this example, the imaginary region Y is a region defined by projecting the circumscribed circle of the three second fingers 51 in the direction of the axis E. That is, the imaginary region Y has a columnar shape. The circumscribed circle is preferably a circumscribed circle of the second fingers 51 that are fully opened.

With this configuration, the second gripper 5 grips the workpiece on the axis E and the two first fingers 21 are bent or curved so that the first parts 22 of the first fingers 21 can be thereby moved to the position at which the first parts 22 interfere with the imaginary region Y. Since the two first fingers 21 are allowed to be opened and closed, the first parts 22 can also be opened and closed. That is, the first parts 22 can be not only opened and closed at the position at which the first parts 22 do not interfere with the imaginary region Y but also opened and closed at the position at which the first parts 22 interfere with the imaginary region Y. For example, the first parts 22 can deliver the workpiece gripped by the first parts 22 to the position at which the first parts 22 interfere with the imaginary region Y, can release griping of the workpiece at the position at which the first parts 22 interfere with the imaginary region Y, and can guide or support the workpiece at the position at which the first parts 22 interfere with the imaginary region Y. Accordingly, the first gripper 2 and the second gripper 5 can achieve various actions in cooperation.

## Claims

1. A hand comprising:
a first gripper; and
a second gripper, wherein
the second gripper grips a workpiece located on a predetermined axis,
the first gripper includes two first fingers that are opened and closed in a predetermined opening/closing direction, and
each of the two first fingers includes a first part including a distal end and a second part including a proximal end, and is bent or curved such that the first part moves between an interference position at which an imaginary region defined by projecting the first part in the opening/closing direction interferes with the axis and a non-interference position at which the imaginary region does not interfere with the axis.

2. The hand according to claim 1, wherein
the first gripper moves the first parts to the interference position while gripping the workpiece with the first parts of the two first fingers, and
the second gripper receives the workpiece from the first parts at the interference position.

3. The hand according to claim 2, wherein
in delivering the workpiece to the second gripper at the interference position, the first gripper guides the workpiece to a delivery posture for delivering the workpiece to the second gripper by the first parts with the workpiece released from gripping by the first parts.

4. The hand according to claim 3, wherein
the first gripper guides the workpiece to the delivery posture by engaging a part of the workpiece with upper portions of the first parts by a self weight of the workpiece.

5. The hand according to claim 3, wherein
the first gripper guides the workpiece to the delivery posture by the first parts with the workpiece placed on a support base by releasing gripping of the workpiece by the first parts.

6. The hand according to any one of claims 2 to 5, wherein
in receiving the workpiece from the first parts, the second gripper grips the workpiece with the axis located at a center of gripping.

7. The hand according to claim 1, wherein
the first gripper guides the workpiece by the first parts to a posture for gripping the workpiece by the second gripper with the first parts of the two first fingers moved to the interference position.

8. The hand according to claim 1, wherein
the second gripper grips the workpiece, and
the first gripper grips the workpiece gripped by the second gripper with the first fingers that are bent or curved.

9. The hand according to claim 1, wherein
the first gripper moves the first parts to the interference position, and
the second gripper temporarily places the workpiece gripped by the second gripper on the first parts at the interference position, and grips the workpiece placed on the first parts again.

10. The hand according to claim 1, wherein
the second gripper is movable a direction of the axis,
the first gripper grips a first workpiece with the first fingers that are bent or curved, the first workpiece being combined with a second workpiece, and
the second gripper changes relative positions of the first workpiece and the second workpiece by moving in the direction of the axis while gripping the second workpiece.

11. A hand comprising:
a first gripper; and
a second gripper, wherein
the first gripper delivers a workpiece gripped by the first gripper to the second gripper, and
the second gripper receives the workpiece from the first gripper on a predetermined axis, and grips the workpiece with the axis located at a center of gripping.

12. A hand control method for controlling the hand according to claim 1, the control method comprising:
gripping a workpiece by the first gripper with the first parts of the two first fingers;
moving the first parts to the interference position by the first gripper with the workpiece gripped by the first gripper; and
receiving the workpiece by the second gripper from the first parts at the interference position.

13. A hand control method for controlling the hand according to claim 1, the control method comprising:
guiding the workpiece by the first gripper with the first parts to a posture for gripping the workpiece by the second gripper in a state where the first parts of the two first fingers have been moved to the interference position; and
gripping, by the second gripper, the workpiece guided by the first gripper.

14. A hand control method for controlling the hand according to claim 1, the control method comprising:
gripping a workpiece by the second gripper; and
gripping, by the first gripper, the workpiece gripped by the second gripper with the first fingers that are bent or curved.

15. A hand control method for controlling the hand according to claim 1, the control method comprising:
moving the first parts to the interference position by the first gripper;
temporarily placing the workpiece by the second gripper on the first parts at the interference position with the workpiece gripped by the second gripper; and
gripping the workpiece placed on the first parts by the second gripper again.

16. A hand control method for controlling the hand according to claim 1, the control method comprising:
gripping a first workpiece by the first gripper with the first fingers that are bent or curved, the first workpiece being combined with a second workpiece;
gripping the second workpiece by the second gripper; and
changing relative positions of the first workpiece and the second workpiece by the second gripper by moving the second gripper in a direction of the axis while gripping the second workpiece.
